# EUROPÄISCHE PATENTSCHRIFT

(11) **EP 4 488 637 B1**
(45) Veröffentlichungstag und Bekanntmachung des Hinweises auf die Patenterteilung: **27.05.2026**
(21) Anmeldenummer: 23183822.8
(22) Anmeldetag: 06.07.2023
(51) Int. Cl.: G01G 19/414

(54) **SELBSTBEDIENUNGSTERMINAL**
SELF-SERVICE TERMINAL
TERMINAL LIBRE-SERVICE

(43) Veröffentlichungstag der Anmeldung: 08.01.2025
(73) Patentinhaber: Diebold Nixdorf Systems GmbH, 33106 Paderborn (DE)
(72) Erfinder: ILIC, Valentina, 10585 Berlin (DE); SCHÄFER, Oliver, 14621 Schönwalde-Glien (DE); HIPELIUS, Ralf Christian, 21465 Reinbek (DE)

(56) Entgegenhaltungen:
- EP-A1- 3 450 934

## Beschreibung

Verschiedene Ausführungsbeispiele betreffen ein Selbstbedienungsterminal.

An einem Selbstbedienungsterminal, wie beispielsweise einer Selbstbedienungskasse, kann ein Benutzer (z.B. ein Kunde) verschiedene Dienstleistungen, wie beispielsweise das Bezahlen eines Einkaufs, ohne Interaktion mit einer zusätzlichen Person in Anspruch nehmen. Hierfür kann es erforderlich sein, die von dem Benutzer zu zahlenden Waren zu ermitteln. Herkömmlicherweise kann der Barcode einer Ware gescannt werden, um zu ermitteln, um welche Ware es sich handelt, und für Waren ohne Barcode, wie zum Beispiel Frischware (z.B. Obst, Gemüse, Brotwaren, etc.), kann es erforderlich sein, dass der Benutzer die Warenart einer jeweiligen Ware manuell auswählt und diese Ware im Falle eines gewichtsabhängigen Preises dann wiegt. Hierbei kann es sowohl für den Betreiber eines solchen Selbstbedienungsterminals (z.B. einem Betreiber eines Geschäfts) als auch die Benutzer (z.B. Kunden) gewünscht sein, den Bezahlvorgang zu beschleunigen.

Dokument EP3450934A1 offenbart ein ähnliches Selbstbedienungsterminal.

Verschiedene Ausführungsformen betreffen ein solches Selbstbedienungsterminal, welches einen schnelleren Bezahlvorgang bereitstellt. Dies wird beispielsweise ermöglicht, indem durch ein Zusammenwirken einer Waage und mindestens eines Bildgebungssensors des Selbstbedienungsterminals ermittelt wird, ob eine oder mehrere Waren und wenn ja welche Waren von einem Benutzer weggenommen wurden. Hierbei kann es ausreichend sein, wenn der Benutzer die Waren nacheinander von der Waage entfernt und beispielsweise einpackt. Hierbei kann auf ein Scannen von Waren und/oder auf ein manuelles Auswählen von barcodelosen Waren verzichtet werden, wodurch der Bezahlvorgang signifikant beschleunigt wird. Ferner ermöglicht dies ein Selbstbedienungsterminal zu verwenden, welches keine zusätzliche Waage (z.B. keine Verifizierungswaage) und/oder keine Scanner-Einheit zum Scannen von Barcodes erfordert, so dass das Selbstbedienungsterminal kleiner und/oder kostengünstiger sein kann.

Es zeigen
- Figuren 1A bis 1D: ein Selbstbedienungsterminal gemäß verschiedenen Ausführungsformen;
- Figuren 2A bis 2F: jeweils Aspekte eines Verarbeitungsschemas zum Ermitteln von von einer Ablagefläche einer Waage des Selbstbedienungsterminals entnommenen Waren gemäß verschiedenen Ausführungsformen;
- Figur 3: ein Ablaufschema des Entnehmens von Waren von der Ablagefläche der Waage gemäß verschiedenen Ausführungsformen;
- Figur 4: eine beispielhafte Anzeige auf einer Anzeigevorrichtung des Selbstbedienungsterminals gemäß verschiedenen Ausführungsformen;
- Figur 5: ein Verarbeitungsschema zum Ermitteln einer von der Ablagefläche der Waage entnommenen Ware gemäß verschiedenen Ausführungsformen und Figur 6 ein beispielhaftes Bild, welches das Entnehmen der Ware durch einen Benutzer zeigt;
- Figuren 7A und 7B: jeweils ein Verarbeitungsschema zum Verifizieren einer ermittelten Warenart einer entnommenen Ware gemäß verschiedenen Ausführungsformen; und
- Figuren 8 und 9: jeweils ein Verfahren zum Ermitteln, ob und wenn ja welche Ware oder Waren von einer Waage eines Selbstbedienungsterminals entnommen wurden, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Verschiedene Ausführungsformen betreffen ein Selbstbedienungsterminal (z.B. eine Selbstbedienungskasse), welches einen (im Vergleich zu herkömmlichen Bezahlvorgängen) schnelleren Bezahlvorgang ermöglicht, indem durch ein Zusammenwirken einer Waage und mindestens eines Bildgebungssensors des Selbstbedienungsterminals ermittelt wird, ob eine oder mehrere Waren und wenn ja welche Waren von einem Benutzer weggenommen wurden, wodurch auf ein Scannen von Waren und/oder auf ein manuelles Auswählen von barcodelosen Waren (z.B. Frischware) verzichtet werden kann.

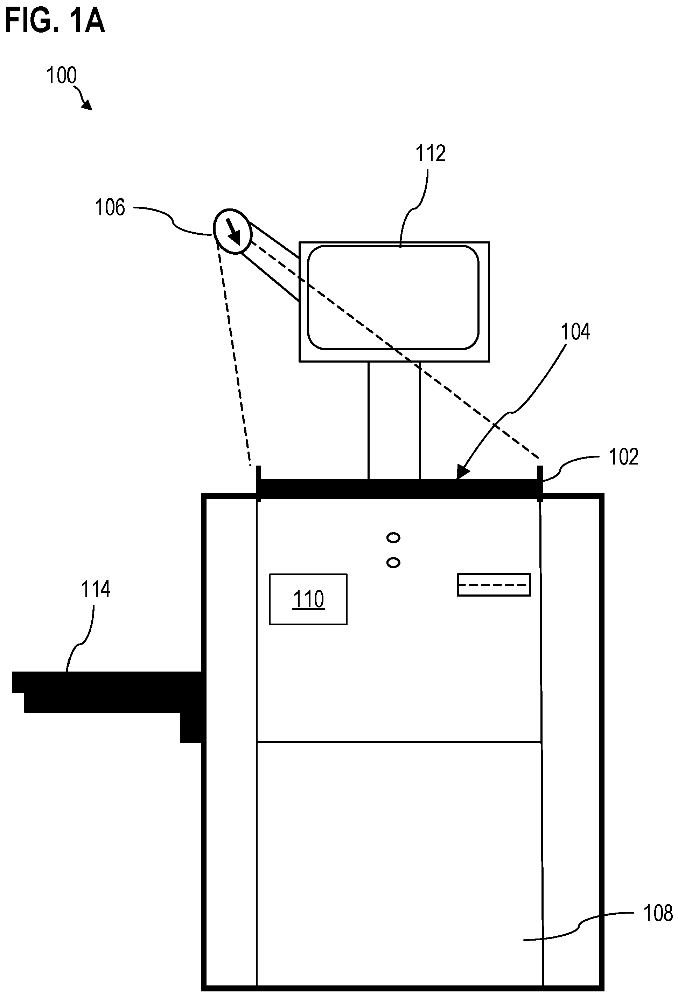

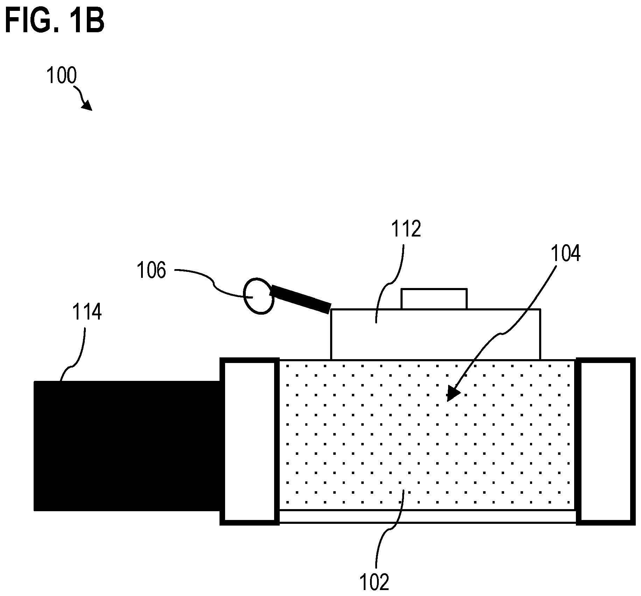

**FIG. 1A** bis **FIG.1D** zeigen ein Selbstbedienungsterminal 100 gemäß verschiedenen Ausführungsformen. Das Selbstbedienungsterminal 100 kann zum Beispiel eine Selbstbedienungskasse sein.

Das Selbstbedienungsterminal 100 kann eingerichtet sein, einen Selbstbedienungs-Bezahlvorgang durch einen Benutzer des Selbstbedienungsterminals (z.B. einen Kunden der Selbstbedienungskasse) zu ermöglichen.

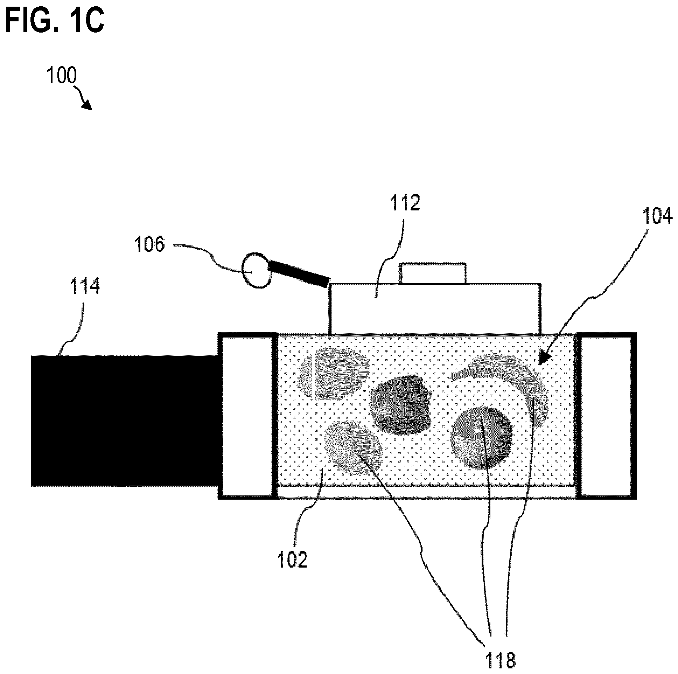

Das Selbstbedienungsterminal 100 kann eine Waage 102 aufweisen. Die Waage 102 kann eine Ablagefläche 104 aufweisen, auf welcher Waren 118 angeordnet werden können. Wie beispielsweise in FIG.1C gezeigt, kann die Ablagefläche 104 derart eingerichtet sein, dass die Waren 118 direkt auf der Ablagefläche 104 angeordnet werden können. In manchen Ausführungsformen können diese Waren jeweils Frischware sein. Frischware kann zum Beispiel keinen Barcode aufweisen. In anderen Ausführungsformen können diese Waren Frischware und/oder Nicht-Frischware aufweisen. Nicht-Frischware kann zum Beispiel einen Barcode aufweisen. Die Waage 102 kann eingerichtet sein, Gewichtsdaten zu erfassen, welche ein Gesamtgewicht von auf der Ablagefläche 104 angeordneten Waren angeben. Die Waage 102 kann eingerichtet sein, die Gewichtsdaten zu erfassen (und beispielsweise an die ein oder mehreren Prozessoren 110 bereitzustellen), sobald eine Schwankung eines erfassten Gewichtswerts für einen vordefinierten Zeitraum kleiner als oder gleich einem vordefinierten Schwankungs-Schwellenwert ist (z.B. der Gewichtswert für den vordefinierten Zeitraum im Wesentlichen stabil ist).

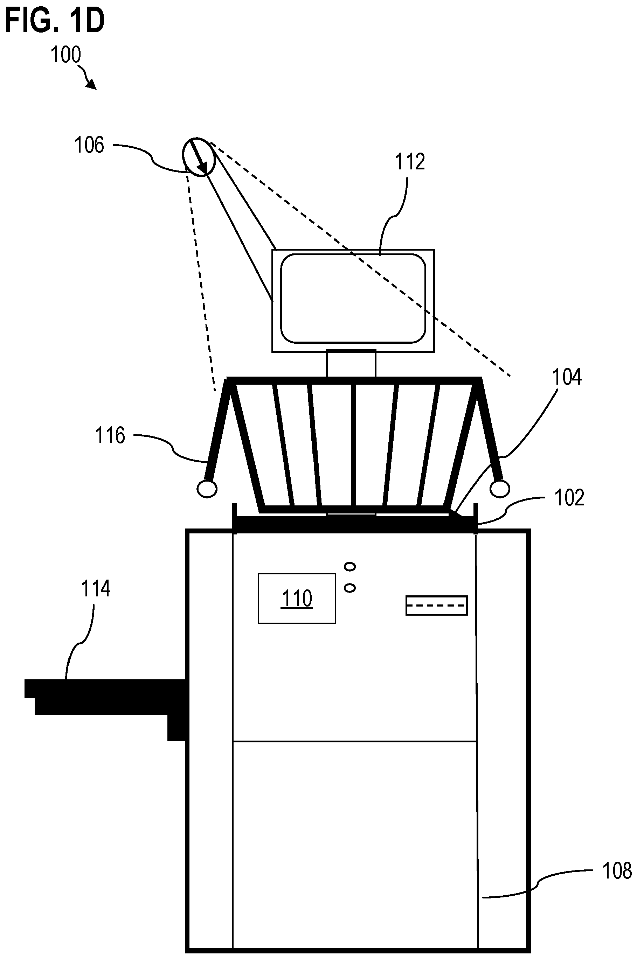

In verschiedenen Ausführungsformen kann die Ablagefläche 104 der Waage 102 derart eingerichtet sein, dass ein Einkaufskorb 116 auf der Ablagefläche 104 angeordnet werden kann. In diesem Fall können sich die auf der Ablagefläche 104 angeordneten Waren 118 in dem Einkaufskorb 116 befinden (siehe zum Beispiel FIG.1D). Alternativ können sich die Waren 188 direkt auf der Ablagefläche 104 der Waage 102 befinden (z.B. darauf liegen) (siehe zum Beispiel FIG.1C).

Das Selbstbedienungsterminal 100 kann mindestens einen Bildgebungssensor 106 aufweisen. Der mindestens eine Bildgebungssensor 106 kann eingerichtet sein, Bilder der Ablagefläche 104 der Waage 102 zu erfassen (siehe zum Beispiel FIG.1A). Der mindestens eine Bildgebungssensor 106 kann eingerichtet sein, Bilder einer Umgebung über der Ablagefläche 104 der Waage 102 zu erfassen (siehe zum Beispiel FIG.1D). Auf diese Weise kann zum Beispiel ein Bild erfasst werden, wenn ein Benutzer gerade eine Ware von der Ablagefläche 104 entnimmt (z.B. kann das Bild die Ware in einer Hand des Benutzers zeigen). Auch kann auf diese Weise ein Bild als Draufsicht auf die sich in dem Einkaufskorb 116 befindenden Waren 118 erfasst werden.

Das Selbstbedienungsterminal 100 kann eine Anzeigevorrichtung 112 aufweisen. Die Anzeigevorrichtung 112 kann in Richtung zu dem Benutzer des Selbstbedienungsterminals 100 ausgerichtet sein. Die die Anzeigevorrichtung 112 kann zum Beispiel einen Bildschirm aufweisen. Optional kann die Anzeigevorrichtung 112 auch eine Bedienfunktion bereitstellen und daher eine Anzeige- und Bedienvorrichtung sein. Ein Beispiel für eine Anzeige- und Bedienvorrichtung ist ein Touchscreen, welcher (als Benutzerschnittstelle) eine Bedienung des Selbstbedienungsterminals 100 ermöglichen kann.

Das Selbstbedienungsterminal 100 kann einen oder mehrere Prozessoren 110 aufweisen. Die ein oder mehreren Prozessoren 110 können, wie hierin beschrieben, jede Art von Logikimplementierender Entität sein. Die ein oder mehreren Prozessoren 110 können eingerichtet sein, eine graphische Anzeige- und/oder Bedienoberfläche auf der Anzeigevorrichtung 112 bereitzustellen. Die Anzeige- und/oder Bedienoberfläche kann den Benutzer bei einem Selbstbedienungsprozess am Selbstbedienungsterminal 100 unterstützen. In manchen Aspekten kann eine Software (z.B. ein Kassenprogramm) zum Betreiben des Selbstbedienungsterminals 100 von den ein oder mehreren Prozessoren 110 implementiert sein bzw. werden. In anderen Aspekten kann die Software auf einem (mittels eines drahtgebundenen und/oder drahtlosen Netzwerkes mit dem Selbstbedienungsterminal 100 verbundenen) (z.B. Terminal-) Server (z.B. mittels Cloudverarbeitung) implementiert sein bzw. werden und die ein oder mehreren Prozessoren 110 können eine entsprechende Anzeige- und/oder Bedienoberfläche auf der Anzeigevorrichtung 112 (z.B. gemäß von dem Server empfangenen Instruktionen) bereitstellen (z.B. können die ein oder mehreren Prozessoren Teil eines Thin Client sein).

Das Selbstbedienungsterminal 100 kann ein Gehäuse 108 aufweisen. Die ein oder mehreren Prozessoren 110 können in dem Gehäuse 108 (z.B. als Teil eines Controllers) angeordnet sein.

Das Selbstbedienungsterminal 100 kann eine Speichervorrichtung aufweisen. Die ein oder mehreren Prozessoren 110 können eingerichtet sein, die Speichervorrichtung bei der Verarbeitung von Daten zu verwenden. Die Speichervorrichtung kann zumindest einen Speicher aufweisen. Ein Speicher kann zum Beispiel ein flüchtiger Speicher, zum Beispiel ein DRAM (dynamischer Direktzugriffsspeicher), oder ein nichtflüchtiger Speicher, zum Beispiel ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCRAM (Phasenwechsel-Direktzugriffsspeicher), sein.

Es wird verstanden, dass das Selbstbedienungsterminal 100 zusätzliche Komponenten aufweisen kann. Zum Beispiel kann das Selbstbedienungsterminal 100 eine Ablage 114 aufweisen, auf welcher der Benutzer (z.B. Kunde) eine Tasche, einen Korb, etc. abstellen kann, um die Waren 118 von der Ablagefläche 104 der Waage 102 darin einzupacken. Ferner kann das Selbstbedienungsterminal 100 andere Peripheriegeräte aufweisen. Ein Peripheriegerät kann jede Art von Gerät sein, welches das Selbstbedienungsterminal 100 verwenden kann, beispielsweise einen Selbstbedienungsprozess eines Benutzers unterstützten kann und/oder eine Sicherheit des Selbstbedienungsterminals 100 bereitstellen kann. Zum Beispiel kann ein Peripheriegerät eines der folgenden Geräte sein: ein (z.B. Kassenbon-) Drucker, ein mobiler, handgehaltener und/oder ein stationärer (z.B. Barcode-) Scanner, eine andere Kamera, ein Kartenlesegerät, ein (z.B. anderes) Bediengerät, ein Verifizierungsgerät (z.B. mittels Gesichtserkennung, Fingerabdruckerkennung, etc.), eine andere Waage, eine Antenneneinheit (welche zum Beispiel ein Erfassen und/oder Entwerten von radiofrequenten, elektromagnetischen, und/oder akustomagnetischen Etiketten und/oder von Radiofrequenzidentifikations-(RFID)-Etiketten ermöglicht (z.B. für ein Elektronisches Artikelsicherungssystem (EAS))), etc. Es wird verstanden, dass das hierin beschriebene Selbstbedienungsterminal 100 auf eine andere Waage (z.B. eine Verifizierungswaage) und/oder auf eine Scanner-Einheit (z.B. einen mobilen, handgehaltenen und/oder einen stationären (z.B. Barcode-) Scanner) verzichten kann und daher in manchen Ausführungsformen eine solche gerade nicht aufweist.

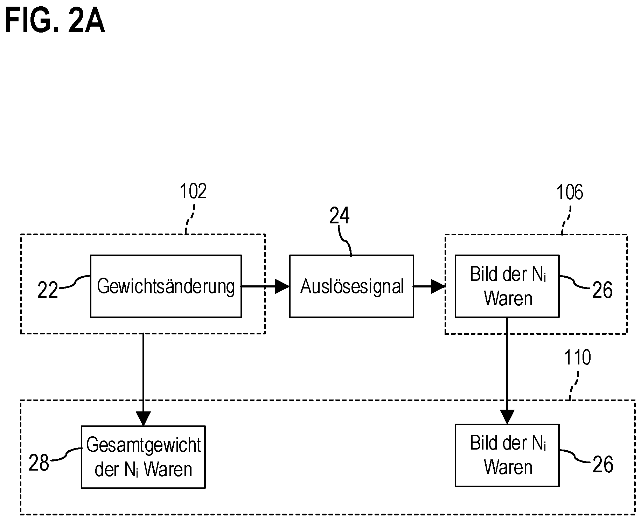

**FIG.2A** bis **FIG.2F** zeigen jeweils Aspekte eines Schemas gemäß verschiedenen Ausführungsformen zum Ermitteln von ein oder mehreren Waren, die von der Ablagefläche 104 der Waage 102 entnommenen werden bzw. wurden.

Gemäß verschiedenen Ausführungsformen kann das Selbstbedienungsterminal 100 derart eingerichtet sein, dass für auf der Ablagefläche 104 angeordnete Waren (mit einer Anzahl von Nᵢ Waren) mittels des mindestens einen Bildgebungssensors 106 ein zugehöriges Bild 26 erfasst werden kann und dass mittels der Waage 102 ein Gesamtgewicht 28 dieser Waren erfasst werden kann. "N" kann jede Ganzzahl größer als oder gleich 0 sein kann. Es wird verstanden, dass N = = bedeutet, dass keine Waren (mehr) auf der Ablagefläche 104 angeordnet sind. Das Selbstbedienungsterminal 100 kann derart eingerichtet sein, jedes Mal ein jeweiliges Gesamtgewicht 28 und ein jeweils zugehöriges Bild 26 zu erfassen, wenn eine von der Waage 102 erfasste Gewichtsänderung einen Erfass-Schwellenwert übersteigt.

In manchen Ausführungsformen (siehe zum Beispiel FIG.2A) kann die Waage 102 eingerichtet sein, eine Gewichtsänderung 22 (in manchen Aspekten auch als Änderung eines erfassten Gewichtswerts bezeichnet) zu erfassen. Die Waage 102 kann eingerichtet sein, in Reaktion auf das Erfassen der Gewichtsänderung 22 das Gesamtgewicht 28 der Nᵢ sich auf der Ablagefläche 104 befindenden Waren an die ein oder mehreren Prozessoren 110 bereitzustellen. Die Waage 102 kann eingerichtet sein, in Reaktion auf das Erfassen der Gewichtsänderung 22 ein Auslösesignal 24 an den mindestens einen Bildgebungssensor 106 bereitzustellen. Der mindestens eine Bildgebungssensor 106 kann eingerichtet sein, in Reaktion auf das Auslösesignal 24 das Bild 26 zu erfassen, welches die Nᵢ Waren auf der Ablagefläche 104 zeigt. Der mindestens eine Bildgebungssensor 106 kann eingerichtet sein, das Bild 26 an die ein oder mehreren Prozessoren 110 bereitzustellen.

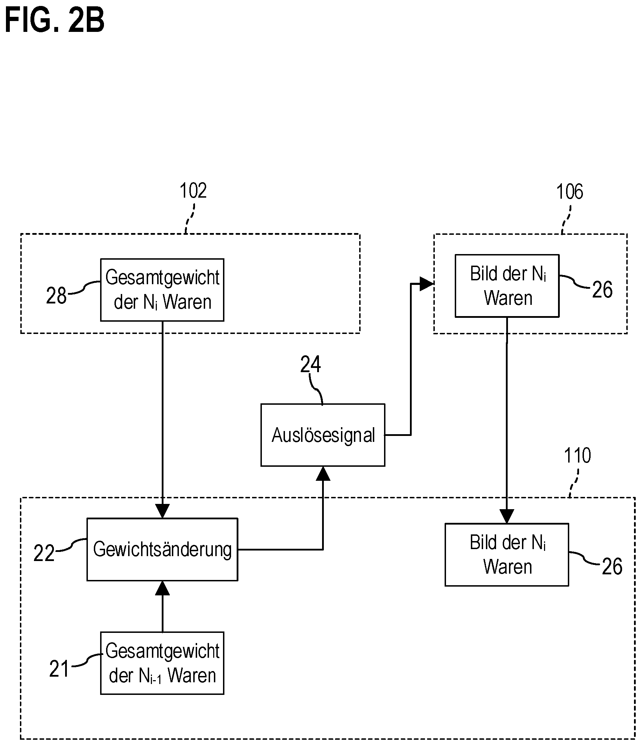

In anderen Ausführungsformen (siehe zum Beispiel FIG.2B) kann die Waage 102 eingerichtet sein, das Gesamtgewicht 28 der Nᵢ sich auf der Ablagefläche 104 befindenden Waren an die ein oder mehreren Prozessoren 110 bereitzustellen und die ein oder mehreren Prozessoren 110 können eingerichtet sein, unter Verwendung eines zuvor von der Waage 102 bereitgestellten Gesamtgewichts 21 von Nᵢ₋₁ sich zuvor auf der Ablagefläche 104 befindenden Waren zu ermitteln, ob (z.B. dass) die Gewichtsänderung 22 stattgefunden hat. Die ein oder mehreren Prozessoren 110 können eingerichtet sein, in Reaktion auf das Erfassen der Gewichtsänderung 22 das Auslösesignal 24 an den mindestens einen Bildgebungssensor 106 bereitzustellen. Der mindestens eine Bildgebungssensor 106 kann dann in Reaktion auf das Auslösesignal 24 das Bild 26 erfassen, welches die Nᵢ Waren auf der Ablagefläche 104 zeigt.

Auf diese Weise kann die Waage 102 eingerichtet sein, jeweilige Gewichtsdaten zu erfassen, sobald eine Änderung des Gesamtgewichts von auf der Ablagefläche 104 angeordneten Waren größer als oder gleich dem (vordefinierten) Erfass-Schwellenwert ist. In Reaktion auf das Erfassen jeweiliger Gewichtsdaten 28 können dann die ein oder mehreren Prozessoren 110 oder die Waage 102 ein jeweiliges Auslösesignal 24 an den mindestens einen Bildgebungssensor 106 bereitstellen, so dass dieser ein den jeweiligen Gewichtsdaten 28 zugehöriges Bild 26 der Ablagefläche 104 erfasst.

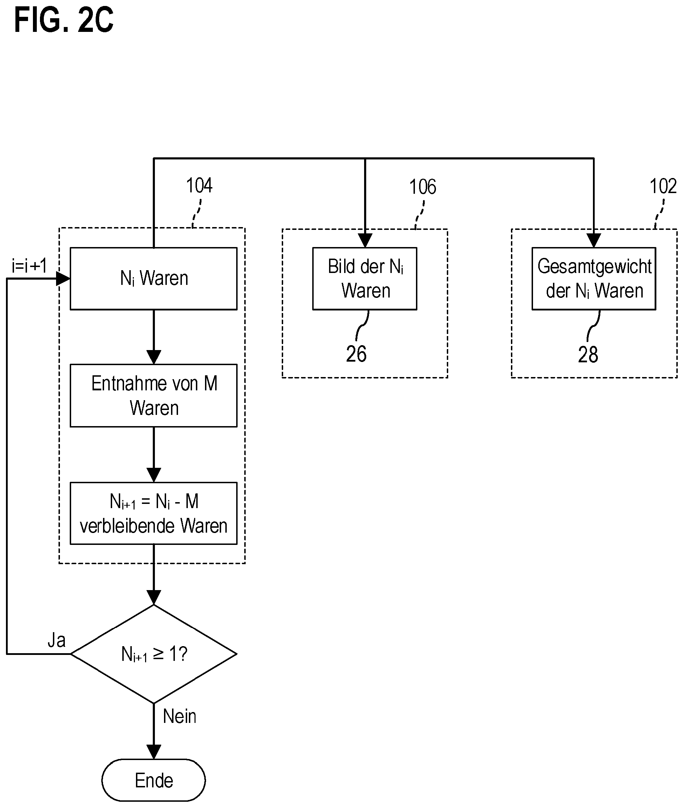

Wie in FIG.2C gezeigt, kann auf diese Weise in jeder Iteration, i, in welcher M Ware(n) (wobei "M" jede Ganzzahl größer als oder gleich eins sein kann; also M Ware(n) eine Ware sein kann oder mehrere Waren sein können) von der Ablagefläche 104 entnommen werden, ein zugehöriges Gesamtgewicht 28 der auf der Ablagefläche 104 angeordneten Waren und ein zugehöriges Bild 26, das die auf der Ablagefläche 104 angeordneten Waren zeigt, erfasst werden kann. Folglich verbleiben in einer nachfolgenden Iteration, i+1, Nᵢ - M waren auf der Ablagefläche 104.

Gemäß verschiedenen Ausführungsformen kann das Selbstbedienungsterminal 100 eingerichtet sein, diesem Schema zu folgen, bis keine Waren mehr auf der Ablagefläche der Waage 102 verbleiben (also Nᵢ = 0 ist).

Daher können die ein oder mehreren Prozessoren 110 in einer Iteration, i-1, ein erstes Gesamtgewicht, Gᵢ₋₁, von Nᵢ₋₁ Waren von der Waage 102 empfangen und ein zugehöriges erstes Bild, Bᵢ₋₁, das die Nᵢ₋₁ Waren auf der Ablagefläche 104 zeigt, von dem mindestens einen Bildgebungssensor 106 empfangen. In einer (direkt darauf) folgenden Iteration, i, (z.B. nach Entnehmen von M Ware(n) durch den Benutzer) können die ein oder mehreren Prozessoren 110 dann ein zweites Gesamtgewicht, Gᵢ , von Nᵢ Waren von der Waage 102 empfangen und ein zugehöriges zweites Bild, Bᵢ ,das die Nᵢ Waren auf der Ablagefläche 104 zeigt, von dem mindestens einen Bildgebungssensor 106 empfangen.

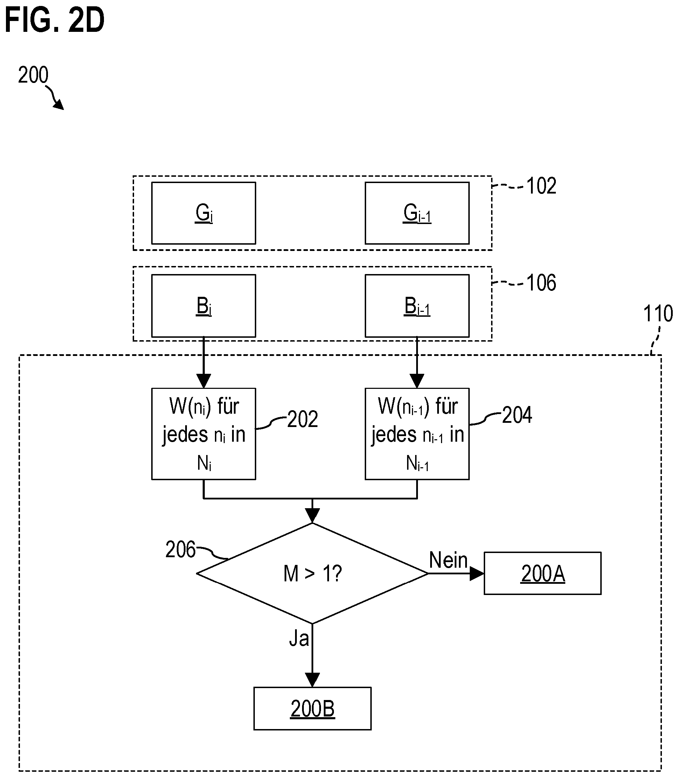

Die ein oder mehreren Prozessoren 110 können eingerichtet sein, aus dem ersten Bild, Bᵢ₋₁ , des mindestens einen Bildgebungssensors 106 zu ermitteln, welche Nᵢ₋₁ Waren auf der Ablagefläche 104 angeordnet sind. Die ein oder mehreren Prozessoren 110 können eingerichtet sein, aus dem zweiten Bild, Bᵢ , des mindestens einen Bildgebungssensors 106 zu ermitteln, welche ein oder mehreren (M) Waren von der Ablagefläche 104 entnommen wurden. **FIG.2D** bis **FIG.2F** zeigen ein diesbezügliches Verarbeitungsschema 200 gemäß verschiedenen Ausführungsformen. Wie beschrieben, können die ein oder mehreren Prozessoren 110 eingerichtet sein, aus einem Bild des mindestens einen Bildgebungssensors 106 zu ermitteln, welche Waren auf der Ablagefläche 104 angeordnet sind. Darunter kann verstanden werden, dass die ein oder mehreren Prozessoren 110 eingerichtet sein können, für jede in dem Bild gezeigte Ware zu ermitteln, um welche Ware es sich hierbei handelt. Hierbei kann eine Ware durch deren Warenart charakterisiert sein. Zum Beispiel im Fall von Gemüse-Waren kann die Warenart angeben, ob es sich bei einer Ware um eine rote Paprika, eine grüne Paprika, eine Salatgurke, eine Möhre, etc. handelt. Im Fall von Nicht-Frischware kann die Warenart eine genaue Produktkennzeichnung (wie zum Beispiel durch einen Barcode angegeben) sein.

Mit Bezug auf FIG.2D können die ein oder mehreren Prozessoren 110 eingerichtet sein (in 204), aus dem ersten Bild, Bᵢ₋₁ , für jede (in dem ersten Bild gezeigte) Ware, nᵢ₋₁ , der Nᵢ₋₁ Waren auf der Ablagefläche 104 eine jeweilige Warenart, W(nᵢ₋₁), zu ermitteln. Die ein oder mehreren Prozessoren 110 können eingerichtet sein (in 202), aus dem zweiten Bild, Bᵢ , für jede (in dem zweiten Bild gezeigte) Ware, nᵢ , der Nᵢ Waren auf der Ablagefläche 104 eine jeweilige Warenart, W(nᵢ), zu ermitteln. Die ein oder mehreren Prozessoren 110 können eingerichtet sein, die jeweilige Warenart W(n) für die in einem Bild gezeigten N Waren (mit 1 ≤ n ≤ N) mittels eines computervisions-basierten Ansatzes zu ermitteln. Zum Beispiel können die ein oder mehreren Prozessoren 110 eingerichtet sein, einen Algorithmus zur semantischen Bildsegmentierung zu implementieren. Bei einer semantischen Bildsegmentierung können die ein oder mehreren Prozessoren 110 ein Bild in mehrere Bildsegmente unterteilen, wobei jedes Bildsegment der mehreren Bildsegmente einem Objekt (z.B. einer Ware) zugeordnet ist (folglich kann jeder Bildpunkt genau einem Objekt zugeordnet sein). Auf diese Weise können Objekte, wie zum Beispiel Waren auf der Ablagefläche 104, erkannt werden. Die ein oder mehreren Prozessoren 110 können ferner die Bildpunkte eines jeden Bildsegments klassifizieren bezüglich einer Warenart. Auf diese Weise können Waren erkannt und ihnen eine jeweilige Warenart zugeordnet werden. Folglich können die ein oder mehreren Prozessoren 110 auch Positionsdaten ermitteln (z.B. unter Verwendung der Bildpunkt-Positionen), die eine Position der jeweiligen Waren auf der Ablagefläche 104 der Waage 102 angeben. Auch die Ablagefläche 104 kann ein zu klassifizierendes Objekt sein.

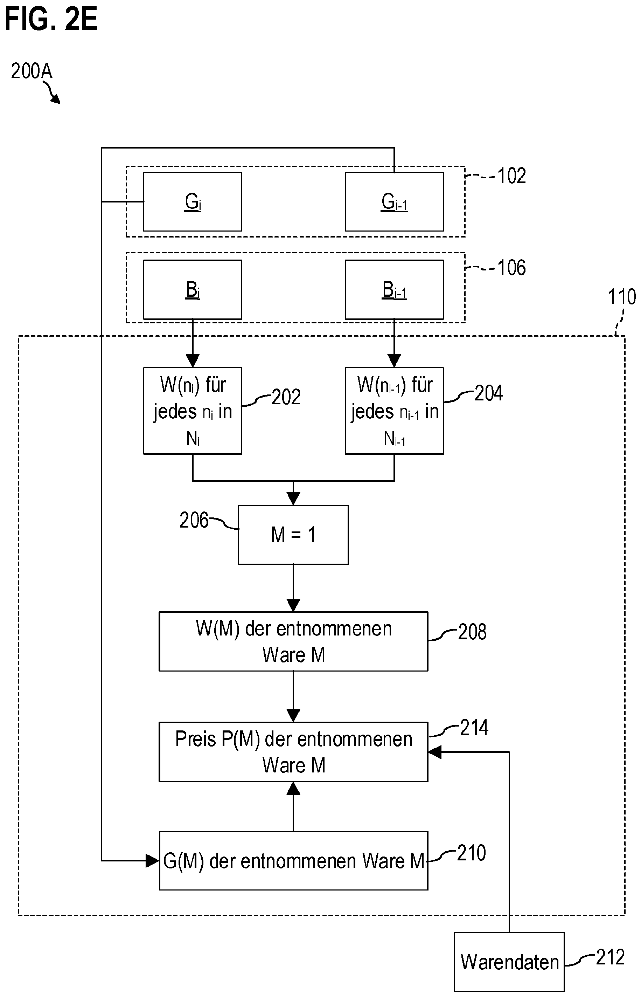

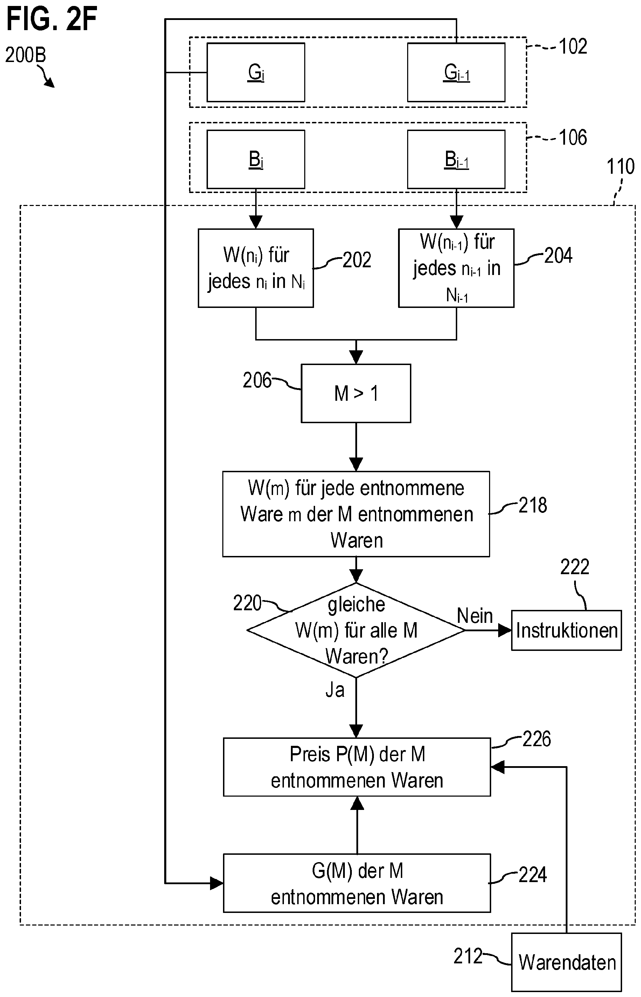

Die ein oder mehreren Prozessoren 110 können eingerichtet sein, unter Verwendung der (in 204) ermittelten Warenarten der Nᵢ₋₁ Waren auf der Ablagefläche 104 und der (in 202) ermittelten Warenarten der Nᵢ Waren auf der Ablagefläche 104 zu ermitteln, welche Ware oder Waren (z.B. Waren welcher Warenart(en))von der Ablagefläche 104 entnommen (z.B. weggenommen) wurden. Die ein oder mehreren Prozessoren 110 können eingerichtet sein, zu ermitteln (in 206), ob mehr als (genau) eine Ware von der Ablagefläche 104 der Waage 102 entnommen wurde. Wenn die ein oder mehreren Prozessoren 110 (in 206) ermitteln, dass genau eine Ware von der Ablagefläche 104 entnommen wurde, kann das Verarbeitungsschema 200 dem in FIG.2E gezeigten Verarbeitungsschema 200A folgen. Wenn die ein oder mehreren Prozessoren 110 (in 206) ermitteln, dass mehrere Waren von der Ablagefläche 104 entnommen wurden, kann das Verarbeitungsschema 200 dem in FIG.2F gezeigten Verarbeitungsschema 200B folgen.

Gemäß verschiedenen Ausführungsformen können die ein oder mehreren Prozessoren 110 eingerichtet sein, Warendaten 212 zu empfangen (z.B. diese aus der Speichervorrichtung abzurufen). Die Warendaten 212 können für jede Ware (z.B. jede Ware, die in dem zugehörigen Geschäft gekauft werden kann) jeweils einen gewichtsabhängigen Preis (z.B. einen Preis pro Kilogramm) oder einen Stückpreis angeben. Dies kann ermöglicht sein, indem die Warendaten 212 für jede Warenart (z.B. jede Warenart, die in dem zugehörigen Geschäft gekauft werden kann) jeweils einen gewichtsabhängigen Preis (z.B. einen Preis pro Kilogramm) oder einen Stückpreis angeben. In manchen Ausführungsformen können die Warendaten 212 ferner für jede Ware bzw. Warenart, für die ein Stückpreis angegeben ist, ein zugehöriges Sollgewicht angeben.

Mit Bezug auf FIG.2E können die ein oder mehreren Prozessoren 110 (in 208) die Warenart W(M) der (genau einen) entnommenen Ware, M, ermitteln (z.B. mittels semantischer Bildsegmentierung, wie hierin beschrieben). Die ein oder mehreren Prozessoren 110 können eingerichtet sein, zu ermitteln, ob die Warendaten 212 für die (in 208) ermittelte Warenart W(M) der entnommenen Ware, M, einen gewichtsabhängigen Preis oder einen Stückpreis angeben. Wenn die Warendaten 212 für die Warenart W(M) einen Stückpreis angeben, können die ein oder mehreren Prozessoren 110 (in 214) den Stückpreis als Preis der entnommenen Ware, M, ermitteln. Die ein oder mehreren Prozessoren 110 können eingerichtet sein, wenn die Warendaten 212 für die Warenart W(M) einen gewichtsabhängigen Preis angeben, (in 210) eine Differenz zwischen dem ersten Gesamtgewicht, Gᵢ₋₁ , der Nᵢ₋₁ Waren und dem zweiten Gesamtgewicht, Gᵢ , der Nᵢ Waren als Gewicht der entnommenen Ware, M, zu ermitteln. Die ein oder mehreren Prozessoren 110 können in diesem Fall (in 214) den Preis der entnommenen Ware, M, als Produkt des gewichtsabhängigen Preises und des Gewichts der entnommenen Ware, M, ermitteln.

Mit Bezug auf FIG.2F können die ein oder mehreren Prozessoren 110 (in 218) eine jeweilige Warenart W(m) für jede Ware, m, der mehreren (mit einer Anzahl M) entnommenen Waren ermitteln (z.B. mittels semantischer Bildsegmentierung, wie hierin beschrieben). Die ein oder mehreren Prozessoren 110 können eingerichtet sein, zu ermitteln (in 220), ob alle Waren der M entnommenen Waren die gleiche Warenart W(m) aufweisen. Gemäß verschiedenen Ausführungsformen (wie auch in FIG.2F gezeigt), können die ein oder mehreren Prozessoren 110 eingerichtet sein, Instruktionen 222 an eine oder mehrere Ausgabevorrichtungen bereitzustellen, wenn (in 220) ermittelt wird, dass zumindest eine Ware der mehreren (M) Waren eine von den anderen Waren der mehreren Waren verschiedene Warenart aufweist. Das Selbstbedienungsterminal 100 kann die ein oder mehreren Ausgabevorrichtungen aufweisen. Eine Ausgabevorrichtung kann jede Art von Ausgabevorrichtung sein, die imstande ist, den Benutzer des Selbstbedienungsterminals 100 Informationen bereitstellen. Hierbei können die Informationen von einer jeweiligen Ausgabevorrichtung der ein oder mehreren Ausgabevorrichtungen beispielsweise akustisch (z.B. mittels eines Lautsprechers) und/oder visuell (z.B. mittels eines Bildschirms) bereitgestellt werden. Die Instruktionen 222 können den Benutzer (durch Ausgabe mittels der ein oder mehreren Ausgabevorrichtungen) anweisen, die mehreren Waren zurück auf die Ablagefläche 104 der Waage 102 zu legen und nur Waren gleicher Warenart gleichzeitig von der Ablagefläche 104 der Waage 102 zu entnehmen. Werden zum Beispiel mehrere verschiedene Waren entnommen, kann diesen Waren kein jeweiliges Teilgewicht des (in 224) ermittelten Gesamtgewichts der M entnommenen Waren zugewiesen werden.

In manchen Ausführungsformen können die ein oder mehreren Prozessoren 110 eingerichtet sein, unter Verwendung der Warendaten 212 zu ermitteln, ob jeder Warenart W(m) der mehreren (M) entnommenen Waren jeweils ein Stückpreis zugewiesen ist. In diesem Fall können die ein oder mehreren Prozessoren 110 dann den jeweiligen Stückpreis als Preis der zugehörigen Ware ermitteln. Die ein oder mehreren Prozessoren 110 können eingerichtet sein, unter Verwendung der Warendaten 212 zu ermitteln, ob jeder Warenart W(m) der mehreren (M) entnommenen Waren jeweils der gleiche gewichtsabhängige Preis zugeordnet ist. In diesem Fall können die ein oder mehreren Prozessoren 110 zwar keinen Einzelpreis für jede Ware der mehreren entnommenen Waren ermitteln, aber können einen gemeinsamen Preis für die mehreren entnommenen Waren anhand des Produkts des (gleichen) gewichtsabhängigen Preises und des (in 224) ermittelten Gesamtgewichts der M entnommenen Waren ermitteln. In diesen Ausgestaltungen können die ein oder mehreren Prozessoren 110 eingerichtet sein, die Instruktionen 222 bereitzustellen, wenn die Warendaten 212 nicht für alle Warenarten der entnommenen Waren einen jeweiligen Stückpreis angeben und/oder wenn die Warendaten 212 nicht für alle Warenarten der entnommenen Waren einen gleichen gewichtsabhängigen Preis angeben.

Mit Bezug auf FIG.2F können die ein oder mehreren Prozessoren 110 eingerichtet sein, wenn (in 220) ermittelt wird, dass alle Waren der M entnommenen Waren die gleiche Warenart W(m) aufweisen, unter Verwendung der Warendaten 212 zu ermitteln, ob die Warendaten 212 für diese Warenart W(m) einen Stückpreis oder einen gewichtsabhängigen Preis angeben. Wenn die Warendaten 212 für die (gleiche) Warenart W(m) einen Stückpreis angeben, können die ein oder mehreren Prozessoren 110 (in 226) den Preis der mehreren, M, entnommenen Waren aus dem Produkt des Stückpreises und der Anzahl, M, (in manchen Aspekten auch als Warenanzahl bezeichnet) an entnommenen Waren ermitteln. Die ein oder mehreren Prozessoren 110 können eingerichtet sein, wenn die Warendaten 212 für die (gleiche) Warenart W(m) einen gewichtsabhängigen Preis angeben, (in 224) eine Differenz zwischen dem ersten Gesamtgewicht, Gᵢ₋₁ , der Nᵢ₋₁ Waren und dem zweiten Gesamtgewicht, Gᵢ , der Nᵢ Waren als Gewicht der mehreren (M) entnommenen Waren zu ermitteln. Die ein oder mehreren Prozessoren 110 können in diesem Fall (in 2226) den Preis der mehreren entnommenen Waren als Produkt des gewichtsabhängigen Preises und des Gewichts der mehreren entnommenen Waren ermitteln.

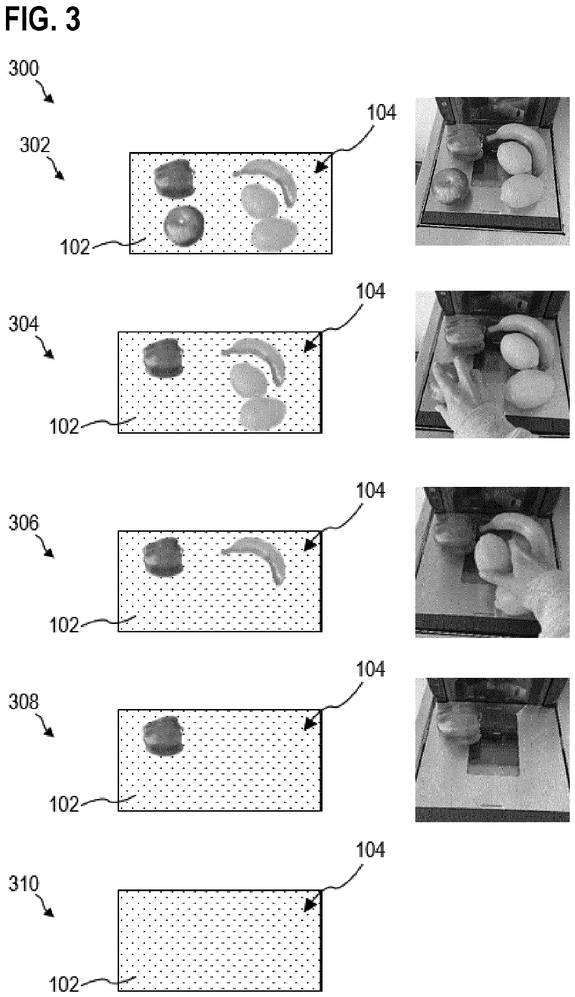

Wie mit Bezug auf FIG.2C beschrieben, kann das Verarbeitungsschema 200 iterativ durchgeführt werden, bis keine Waren mehr auf der Ablagefläche 104 angeordnet sind. **FIG.3** veranschaulicht ein beispielhaftes Ablaufschema 300 des Entnehmens von Waren von der Ablagefläche. Der Benutzer kann (z.B. zum Bezahlen der Waren) eine Vielzahl von Waren (in diesem Beispiel 2 Zitronen, eine grüne Paprika, einen roten Apfel und eine Banane) auf die Ablagefläche 104 der Waage 102 legen (in 302). Daher liegen in der ersten Iteration Nᵢ = 5 Waren auf der Ablagefläche 104. Die ein oder mehreren Prozessoren 110 können unter Verwendung des zugehörigen Bildes, Bᵢ , die jeweiligen Warenart (also Zitrone, grüne Paprika, roter Apfel, Banane) ermitteln. In diesem Beispiel entnimmt der Benutzer (in 304) genau eine Ware (M = 1). Die ein oder mehreren Prozessoren 110 können unter Verwendung der Gewichtsdaten ermitteln, dass zumindest eine Ware entnommen wurde und können unter Verwendung des Bildes, Bᵢ₊₁ , ermitteln, dass der rote Apfel entnommen wurde. Die ein oder mehreren Prozessoren 110 können daher gemäß dem Verarbeitungsschema 200A ermitteln, dass der rote Apfel einen gewichtsabhängigen Preis hat und können das Gewicht des roten Apfels aus der Differenz der Gewichtsdaten, Gᵢ , der ersten Iteration und der Gewichtsdaten, Gᵢ₊₁ , der zweiten Iteration ermitteln und können den Preis als Produkt aus gewichtsabhängigen Preis und Gewicht des roten Apfels ermitteln. Gemäß verschiedenen Ausführungsformen können die ein oder mehreren Prozessoren 110 eingerichtet sein, entsprechende Instruktionen an die Anzeigevorrichtung 112 bereitzustellen, welche die Anzeigevorrichtung 112 anweisen, den ermittelten Preis für den roten Apfel anzuzeigen. In diesem Beispiel entnimmt der Benutzer (in 306) mehrere (und zwar zwei) Waren (M = 2). Die ein oder mehreren Prozessoren 110 können unter Verwendung der Gewichtsdaten ermitteln, dass zumindest eine Ware entnommen wurde und können unter Verwendung des Bildes, Bᵢ₊₂ , ermitteln, dass die zwei Zitronen entnommen wurden. Die ein oder mehreren Prozessoren 110 können dann gemäß dem Verarbeitungsschema 200B ermitteln, dass die zwei Waren die gleiche Warenart (Zitrone) haben und können dann aus den Warendaten 212 ermitteln, dass Zitronen einen Stückpreis haben, und können den Preis für die zwei Zitronen als Produkt aus der Anzahl (also 2) und dem Stückpreis für Zitronen ermitteln. Die ein oder mehreren Prozessoren 110 können anschließend entsprechende Instruktionen an die Anzeigevorrichtung 112 bereitzustellen, welche die Anzeigevorrichtung 112 anweisen, den ermittelten Preis für die zwei Zitronen anzuzeigen. In diesem Beispiel entnimmt der Benutzer (in 308) dann genau eine Ware (M = 1). Die ein oder mehreren Prozessoren 110 können unter Verwendung der Gewichtsdaten ermitteln, dass zumindest eine Ware entnommen wurde und können unter Verwendung des Bildes, Bᵢ₊₃ , ermitteln, dass die Banane entnommen wurde. Die ein oder mehreren Prozessoren 110 können daher gemäß dem Verarbeitungsschema 200A ermitteln, dass die Banane einen gewichtsabhängigen Preis hat und können das Gewicht der Banane aus der Differenz der Gewichtsdaten, Gᵢ₊₂ , der dritten Iteration und der Gewichtsdaten, Gᵢ₊₃ , der vierten Iteration ermitteln und können den Preis für die Banane als Produkt des gewichtsabhängigen Preises und des Gewichts der Banane ermitteln. Die ein oder mehreren Prozessoren 110 können anschließend entsprechende Instruktionen an die Anzeigevorrichtung 112 bereitzustellen, welche die Anzeigevorrichtung 112 anweisen, den ermittelten Preis für die Banane anzuzeigen. In diesem Beispiel entnimmt der Benutzer (in 310) dann genau eine Ware (M = 1). Die ein oder mehreren Prozessoren 110 können unter Verwendung der Gewichtsdaten ermitteln, dass zumindest eine Ware entnommen wurde und können unter Verwendung des Bildes, Bᵢ₊₄ , ermitteln, dass die grüne Paprika entnommen wurde. Die ein oder mehreren Prozessoren 110 können daher gemäß dem Verarbeitungsschema 200A ermitteln, dass die grüne Paprika einen gewichtsabhängigen Preis hat und können das Gewicht der grünen Paprika aus der Differenz der Gewichtsdaten, Gᵢ₊₃ , der vierten Iteration und der Gewichtsdaten, Gᵢ₊₄ , der fünften Iteration ermitteln und können den Preis für die grüne Paprika als Produkt des gewichtsabhängigen Preises und des Gewichts der grünen Paprika ermitteln. Die ein oder mehreren Prozessoren 110 können anschließend entsprechende Instruktionen an die Anzeigevorrichtung 112 bereitzustellen, welche die Anzeigevorrichtung 112 anweisen, den ermittelten Preis für die grüne Paprika anzuzeigen. Die ein oder mehreren Prozessoren 110 können dann, wie in FIG.2C gezeigt, ermitteln, dass keine Waren mehr auf der Ablagefläche angeordnet sind.

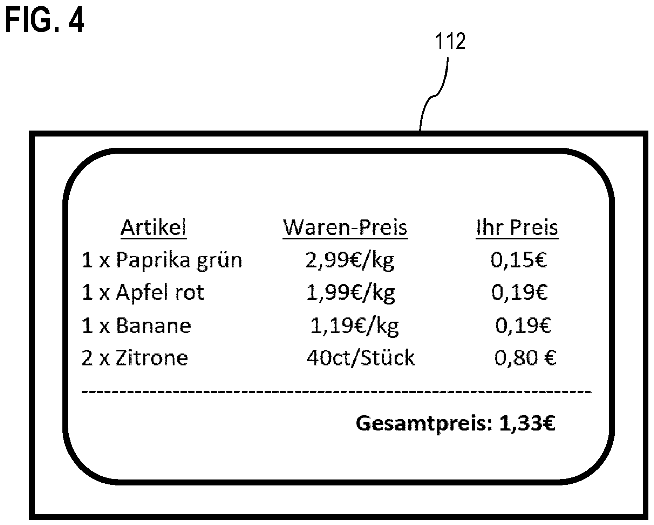

Gemäß verschiedenen Ausführungsformen können die ein oder mehreren Prozessoren 110 eingerichtet sein, einen Gesamtpreis als Summe der ermittelten Preise zu ermitteln. Die ein oder mehreren Prozessoren 110 können eingerichtet sein, entsprechende Informationen zum Anzeigen des Gesamtpreises auf der Anzeigevorrichtung 112 an die Anzeigevorrichtung 112 bereitzustellen. **FIG.4** zeigt eine beispielhafte Anzeige auf der Anzeigevorrichtung 122 für das in FIG.3 gezeigte Beispiel. Das Selbstbedienungsterminal 100 kann eine Bezahlvorrichtung (z.B. ein Kartenlesegerät) aufweisen. Gemäß verschiedenen Ausführungsformen können die ein oder mehreren Prozessoren 110 eingerichtet sein, Instruktionen zum Bezahlen des Gesamtpreises an die Bezahlvorrichtung bereitzustellen.

Gemäß verschiedenen Ausführungsformen können die ein oder mehreren Prozessoren 110 entsprechende Instruktionen bereitstellen, so dass die Anzeigevorrichtung 112 die (in 204) ermittelten (z.B. initial auf die Ablagefläche 104 gelegten) Warenarten, und/oder den (in 214 oder 226) jeweils ermittelten Preis, und/oder den von den Warendaten 212 für die Warenarten angegebenen Stückpreis oder gewichtsabhängigen Preis, und/oder den ermittelten Gesamtpreis anzeigen kann. Optional kann die Anzeigevorrichtung 112 für eine oder mehrere Warenarten Informationen anzuzeigen, die angeben, dass der Preis für die jeweilige Warenart noch nicht ermittelt wurde.

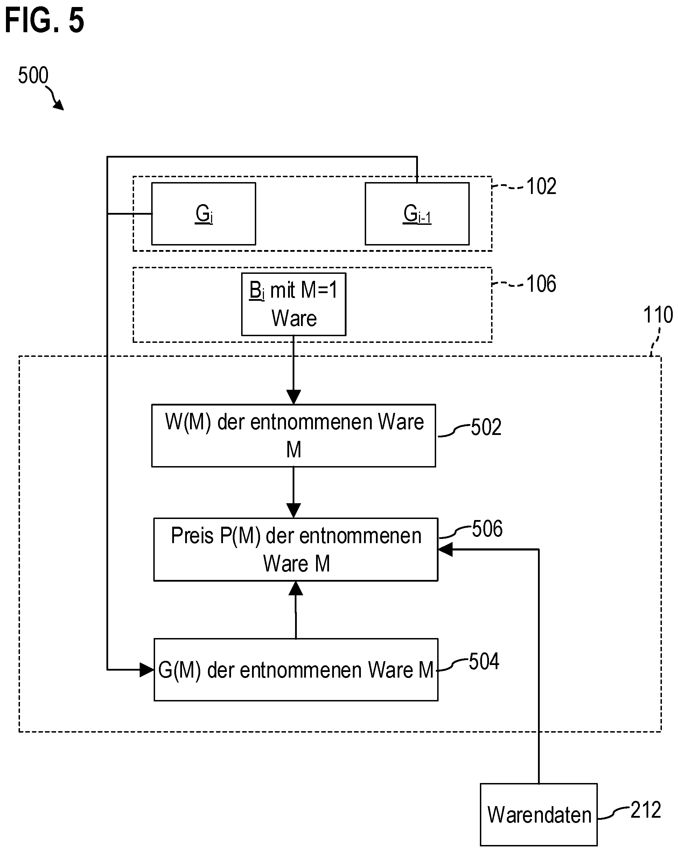

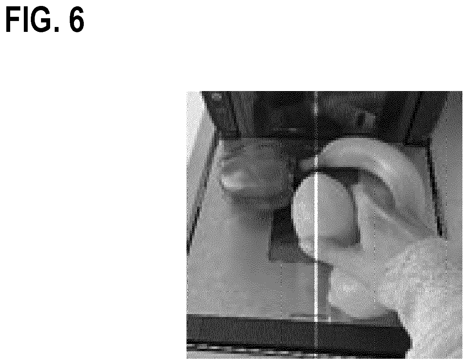

**FIG.5** zeigt ein zu dem Verarbeitungsschema 200 ähnliches Verarbeitungsschema 500 gemäß verschiedenen Ausführungsformen. Wie hierin beschrieben, kann der mindestens eine Bildgebungssensor 106 eingerichtet sein, in jeder Iteration, i, ein Bild, Bᵢ , von einem Bereich über der Ablagefläche 104 zu erfassen. Auf diese Weise kann der mindestens eine Bildgebungssensor 106, wenn der Benutzer eine Ware (M = 1) von der Ablagefläche 104 entnimmt, ein Bild erfassen, welches die Ware in der Hand des Benutzers zeigt (ein beispielhaftes Bild ist in FIG.6 gezeigt, wobei eine Zitrone in der Hand des Benutzers angeordnet ist). Hierbei kann der Benutzer die Ware direkt von der Ablagefläche entnehmen oder aus dem Einkaufskorb. Die ein oder mehreren Prozessoren 110 können eingerichtet sein, aus dem jeweiligen Bild, Bᵢ , zu ermitteln (in 502), welche Ware sich in der Hand des Benutzers befindet (also welche Warenart W(M) die Ware M hat). Hierbei kann mittels semantischer Bildsegmentierung ermittelt werden, welches Bildsegment eine Hand zeigt, so dass ein zugehöriges benachbartes Bildsegment, das eine Ware zeigt, als in der Hand angeordnete Ware erkannt werden kann. Wie mit Bezug auf das Verarbeitungsschema 200A beschrieben, können die ein oder mehreren Prozessoren 110 unter Verwendung der Warendaten 212 ermitteln, ob diese für die Warenart W(M) einen Stückpreis oder einen gewichtsabhängigen Preis angeben. Die ein oder mehreren Prozessoren 110 können dann (in 506) im Falle des Stückpreises den Stückpreis als Preis der Ware M ermitteln und können im Falle des gewichtsabhängigen Preises (in 504) das Gewicht der entnommenen Ware aus der Differenz der Gewichtsdaten ermitteln und den Preis (in 506) als Produkt aus Gewicht und gewichtsabhängigen Preis ermitteln.

Anschaulich können die hierin beschriebenen Verarbeitungsschemata ein inverses Wiegen von Waren bereitstellen.

Gemäß verschiedenen Ausführungsformen können die ein oder mehreren Prozessoren 110 eingerichtet sein, bereits in einer initialen, ersten Iteration (also wenn die Waren durch den Benutzer auf die Ablagefläche 104 gelegt werden), zu ermitteln, ob die Warendaten 212 für eine oder mehrere dieser Waren einen Stückpreis angeben. In diesem Fall kann der Preis für diese Waren bereits in der initialen Iteration unter Verwendung des Stückpreises ermittelt werden. Optional kann daher dieser Preis bereits in der initialen Iteration auf der Anzeigevorrichtung 112 angezeigt werden.

Gemäß verschiedenen Ausführungsformen können die ein oder mehreren Prozessoren 110 eingerichtet sein, eine ermittelte Warenart zu verifizieren.

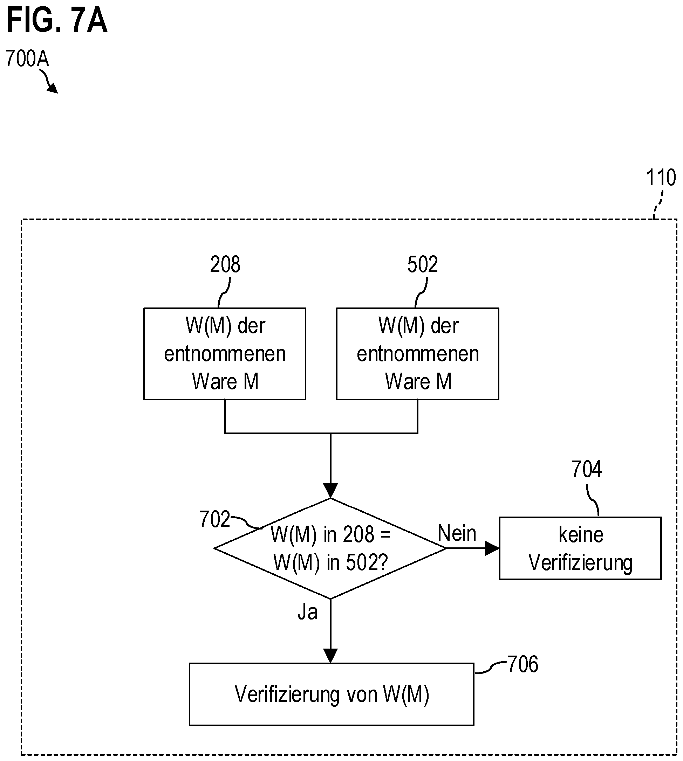

**FIG.7A** zeigt ein erstes Verarbeitungsschema 700A zum Verifizieren einer ermittelten Warenart einer entnommenen Ware gemäß verschiedenen Ausführungsformen. Gemäß verschiedenen Ausführungsformen kann der mindeste eine Bildgebungssensor 106 eingerichtet sein, sowohl das Bild über der Ablagefläche 104 zu erfassen, welches die Ware M in der Hand des Benutzers zeigen kann, als auch das Bild der Ablagefläche selbst zu erfassen. Daher können die ein oder mehreren Prozessoren 110 für die M = 1 entnommene Ware eine erste Warenart 208 gemäß dem Verarbeitungsschema 200A und eine zweite Warenart 502 gemäß dem Verarbeitungsschema 500 ermitteln. Die ein oder mehreren Prozessoren 110 können eingerichtet sein (in 702), die erste Warenart 208 mit der zweiten Warenart 502 zu vergleichen und können (in 706) die erste Warenart 208 als Warenart der Ware M verifizieren, wenn die erste Warenart 208 der zweiten Warenart 502 entspricht. Andernfalls können die ein oder mehreren Prozessoren 110 (in 704) die Warenart nicht verifizieren. In diesem Fall können die ein oder mehreren Prozessoren 110 zum Beispiel Instruktionen an die ein oder mehreren Ausgabevorrichtungen bereitstellen, welche den Benutzer anweisen, die Ware zurück auf die Ablagefläche (z.B. in den Einkaufskorb, sofern vorhanden) zu legen.

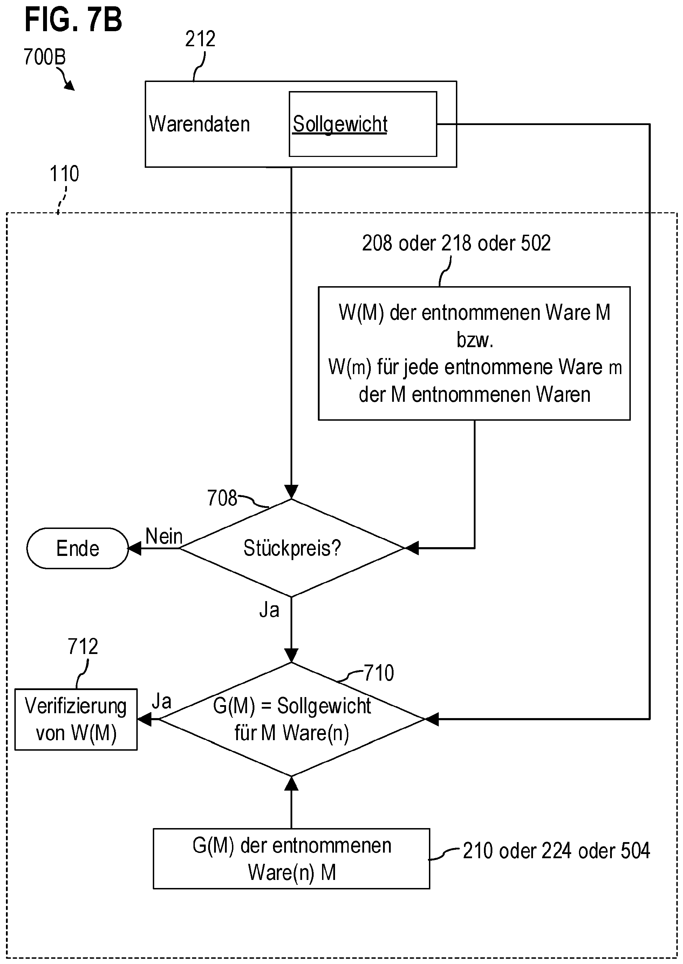

**FIG.7B** zeigt ein zweites Verarbeitungsschema 700B zum Verifizieren einer ermittelten Warenart einer entnommenen Ware gemäß verschiedenen Ausführungsformen. Wie hierin beschrieben, können die Warendaten 212 für jede Warenart, für die ein Stückpreis angegeben ist, ein zugehöriges Sollgewicht angeben. Wie hierin beschrieben, können die ein oder mehreren Prozessoren 110 zum Ermitteln des Preises einer oder mehrerer Waren ermitteln, ob die Warendaten 212 für eine jeweilige Warenart einen Stückpreis angeben. Geben die Warendaten 212 für Warenart einen Stückpreis an ("Ja" in 708), können die ein oder mehreren Prozessoren 110 (in 710) ermitteln, ob das Gewicht G(M) der einen entnommenen Ware (210 oder 504) bzw. der mehreren entnommenen Waren (224) mit dem Sollgewicht im Wesentlichen übereinstimmt. Es wird verstanden, dass im Falle von mehreren Waren gleicher Warenart (also dem Verarbeitungsschema 200B) ein erwartetes Gewicht für diese mehreren Waren als Produkt aus dem Sollgewicht für die (gleiche) Warenart und der Anzahl der Waren, M, ermittelt werden kann. In dem Fall, dass genau eine Ware entnommen wird, kann das erwartete Gewicht dem Sollgewicht entsprechen. Das erwartete Gewicht kann im Wesentlichen mit dem Gewicht G(M) der einen entnommenen Ware (210 oder 504) bzw. der mehreren entnommenen Waren (224) übereinstimmen, wenn eine Differenz zwischen dem erwarteten Gewicht und dem Gewicht G(M) kleiner als oder gleich einem vordefinierten Verifizierungs-Schwellenwert ist. Ist dies der Fall, so kann die ermittelte Warenart (in 712) verifiziert werden. Andernfalls können die ein oder mehreren Prozessoren 110 eingerichtet sein, die Warenart nicht zu verifizieren. In diesem Fall können die ein oder mehreren Prozessoren 110 zum Beispiel Instruktionen an die ein oder mehreren Ausgabevorrichtungen bereitstellen, welche den Benutzer anweisen, die Ware bzw. die Waren zurück auf die Ablagefläche (z.B. in den Einkaufskorb, sofern vorhanden) zu legen.

Wie hierin beschrieben, kann das Selbstbedienungsterminal 100 optional eine Scanner-Einheit (z.B. einen Barcode-Scanner) aufweisen. Gemäß einem dritten Verarbeitungsschema zum Verifizieren einer ermittelten Warenart einer entnommenen Ware können die ein oder mehreren Prozessoren 110 eingerichtet sein, wenn ein Barcode der entnommenen Ware mittels der Scanner-Einheit erfasst wird, Informationen, die den erfassten Barcode repräsentieren, von der Scanner-Einheit zu empfangen. Die ein oder mehreren Prozessoren 110 können eingerichtet sein, unter Verwendung dieser Informationen eine Warenart der entnommenen Ware zu ermitteln und können diese dann mit der gemäß dem Verarbeitungsschema 200A (oder 200B) oder dem Verarbeitungsschema 500 ermittelten Warenart vergleichen, um die Warenart bei Übereinstimmung zu verifizieren.

Es wird verstanden, dass eine Kombination aus dem ersten Verifizierungs-Verarbeitungsschema 700A und/oder dem zweiten Verifizierungs-Verarbeitungsschema 700B und/oder dem dritten Verifizierungs-Verarbeitungsschema verwendet werden kann.

Wenn die ein oder mehreren Prozessoren 110, wie hierin beschrieben, Instruktionen bereitstellen, die den Benutzer anweisen, eine oder mehrere Waren zurück auf die Ablagefläche 104 zu legen, kann das jeweilige Verarbeitungsschema stoppen, bis die Ware(n) zurück auf die Ablagefläche 104 gelegt wurden.

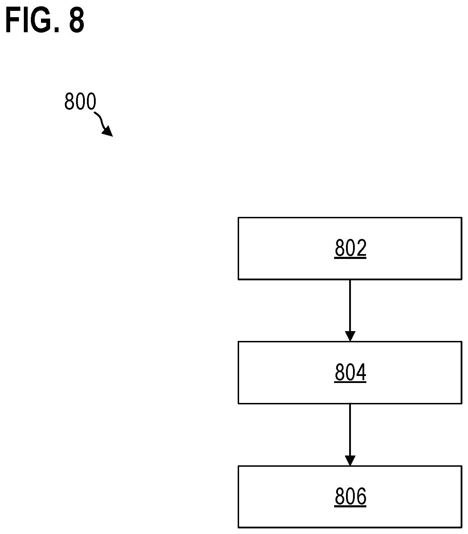

**FIG.8** zeigt ein Ablaufdiagramm eines Verfahrens 800 zum Ermitteln, ob und wenn ja welche Ware oder Waren von einer Waage eines Selbstbedienungsterminals entnommen wurden, gemäß verschiedenen Ausführungsformen.

Das Verfahren 800 kann ein Ermitteln, aus mindestens einem ersten Bild einer Ablagefläche der Waage, welche Waren auf der Ablagefläche angeordnet sind, aufweisen (in 802).

Das Verfahren 800 kann ein Ermitteln, unter Verwendung erster Gewichtsdaten, welche ein erstes Gesamtgewicht der Waren, die sich auf der Ablagefläche befinden, angeben, und zweiter Gewichtsdaten, welche ein zweites Gesamtgewicht von Waren, die sich auf der Ablagefläche befinden, angeben, ob eine oder mehrere Waren von der Ablagefläche entnommen wurden, aufweisen (in 804).

Das Verfahren 800 kann ein Ermitteln aus mindestens einem zweiten Bild der Ablagefläche, welche ein oder mehreren Waren von der Ablagefläche entnommen wurden, aufweisen (in 806).

Das jeweilige Ermitteln (in 802, 804 und/oder 806) kann beispielsweise wie in Bezug auf FIG.2A bis FIG.2F beschrieben erfolgen.

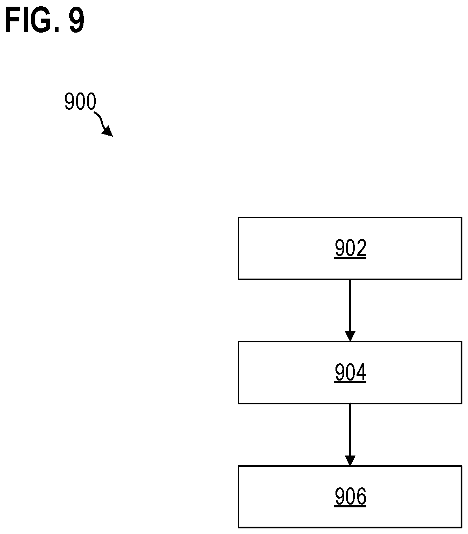

**FIG.9** zeigt ein Ablaufdiagramm eines Verfahrens 900 zum Ermitteln, ob und wenn ja welche Ware oder Waren von einer Waage eines Selbstbedienungsterminals entnommen wurden, gemäß verschiedenen Ausführungsformen.

Das Verfahren 900 kann ein Ermitteln, unter Verwendung erster Gewichtsdaten, welche ein erstes Gesamtgewicht von Waren, die sich auf einer Ablagefläche einer Waage befinden, angeben, und zweiter Gewichtsdaten, welche ein zweites Gesamtgewicht von Waren, die sich auf der Ablagefläche befinden, angeben, ob eine Ware von der Ablagefläche entnommen wurde, aufweisen (in 902).

Das Verfahren 900 kann ein Ermitteln aus mindestens einem Bild einer Umgebung über der Ablagefläche, ob sich eine Ware und wenn ja welche Ware sich in einer Hand eines Benutzers befindet, aufweisen (in 904).

Das Verfahren 900 kann ein Ermitteln der Ware, die sich in der Hand des Benutzers befindet, als die von der Ablagefläche entnommene Ware, aufweisen (in 906).

Das jeweilige Ermitteln (in 902, 904 und/oder 906) kann beispielsweise wie in Bezug auf FIG.5 beschrieben erfolgen.

Hierin werden verschiedene Aspekte des Selbstbedienungsterminals 100 und der Verfahren 800, 900 beschrieben. Es wird verstanden, dass Aspekte die in Bezug auf das Selbstbedienungsterminal 100 beschrieben werden auch entsprechend auf die Verfahren Anwendung finden können (z.B. als Verfahren ausgeführt werden können).

Im Folgenden werden Bespiele beschrieben, welche verschiedene Aspekte des Selbstbedienungsterminals 100 und der Verfahren 800, 900 veranschaulichen.

Beispiel 1 ist eine Selbstbedienungsterminal, aufweisend: eine Waage mit einer Ablagefläche, auf der Waren (z.B. Frischware, wie beispielsweise Obst, Gemüse, Brotwaren, etc.) angeordnet werden können, wobei die Waage eingerichtet ist, Gewichtsdaten zu erfassen, welche ein Gesamtgewicht von auf der Ablagefläche angeordneten Waren angeben; mindestens einen Bildgebungssensor, der eingerichtet ist, Bilder der Ablagefläche der Waage zu erfassen; einen oder mehrere Prozessoren, die eingerichtet sind: aus mindestens einem ersten Bild des mindestens einen Bildgebungssensors zu ermitteln, welche Waren auf der Ablagefläche angeordnet sind; erste Gewichtsdaten von der Waage zu empfangen, wobei die ersten Gewichtsdaten ein erstes Gesamtgewicht der Waren, die sich auf der Ablagefläche befinden, angeben; zweite Gewichtsdaten von der Waage zu empfangen, wobei die zweiten Gewichtsdaten ein zweites Gesamtgewicht von Waren, die sich auf der Ablagefläche befinden, angeben; unter Verwendung der ersten Gewichtsdaten und der zweiten Gewichtsdaten zu ermitteln, ob eine oder mehrere Waren von der Ablagefläche entnommen wurden; und (wenn ermittelt wird, dass ein oder mehrere Waren von der Ablagefläche entnommen wurden) aus mindestens einem zweiten Bild des mindestens einen Bildgebungssensors zu ermitteln, welche ein oder mehreren Waren von der Ablagefläche entnommen wurden.

Beispiel 2 ist eingerichtet gemäß Beispiel 1, wobei das zweite Gesamtgewicht ein Gesamtgewicht der Waren angibt, die bei Erfassen des mindestens einen zweiten Bildes auf der Ablagefläche angeordnet sind.

Beispiel 3 ist ein Selbstbedienungsterminal gemäß Beispiel 1 oder 2, wobei die ein oder mehreren Prozessoren eingerichtet sind, wenn aus dem mindestens einen zweiten Bild ermittelt wird, dass (genau) eine Ware von der Ablagefläche entnommen wurde, zu ermitteln, ob Warendaten, die für jede Ware jeweils einen gewichtsabhängigen Preis oder einen Stückpreis angeben, für die entnommene Ware einen gewichtsabhängigen Preis oder einen Stückpreis angeben.

Beispiel 4 ist eingerichtet gemäß Beispiel 3, wobei die ein oder mehreren Prozessoren eingerichtet sind, wenn ermittelt wird, dass die Warendaten für die entnommene Ware einen gewichtsabhängigen Preis angeben: eine Differenz zwischen dem ersten Gesamtgewicht und dem zweiten Gesamtgewicht als Gewicht der entnommenen Ware zu ermitteln; und einen Preis der entnommenen Ware unter Verwendung des gewichtsabhängigen Preises und des Gewichts der entnommenen Ware zu ermitteln.

Beispiel 5 ist ein Selbstbedienungsterminal gemäß Beispiel 3 oder 4, wobei die ein oder mehreren Prozessoren eingerichtet sind, wenn ermittelt wird, dass die Warendaten für die entnommene Ware einen Stückpreis angeben, den Stückpreis als Preis der entnommenen Ware zu ermitteln.

Beispiel 6 ist eingerichtet gemäß Beispiel 5, wobei die Warendaten ferner für jede Ware, für die ein Stückpreis angegeben ist, ein jeweiliges Sollgewicht einer solchen Ware angeben; und wobei die ein oder mehreren Prozessoren eingerichtet sind, wenn ermittelt wird, dass die Warendaten für die entnommene Ware einen Stückpreis angeben: eine Differenz zwischen dem ersten Gesamtgewicht und dem zweiten Gesamtgewicht als Gewicht der entnommenen Ware zu ermitteln; zu ermitteln, ob eine Differenz zwischen dem von den Warendaten angegebenen Sollgewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, die aus dem mindestens einen zweiten Bild ermittelte entnommene Ware zu verifizieren und den Stückpreis als Preis der entnommenen Ware zu ermitteln.

Beispiel 7 ist ein Selbstbedienungsterminal gemäß einem der Beispiele 1 bis 6, wobei die ein oder mehreren Prozessoren eingerichtet sind, wenn aus dem mindestens einen zweiten Bild ermittelt wird, dass mehrere Waren von der Ablagefläche entnommen wurden: zu ermitteln, ob jede Ware der mehreren Waren einer gleichen Warenart angehört; und wenn ermittelt wird, dass jede Ware der mehreren Waren der gleichen Warenart angehört, zu ermitteln, ob die Warendaten, die für jede Warenart jeweils einen gewichtsabhängigen Preis oder einen Stückpreis angeben, für die Warenart der mehreren Waren einen gewichtsabhängigen Preis oder einen Stückpreis angeben.

Beispiel 8 ist eingerichtet gemäß Beispiel 7, wobei die ein oder mehreren Prozessoren eingerichtet sind, wenn ermittelt wird, dass die Warendaten für die Warenart der mehreren Waren einen gewichtsabhängigen Preis angeben: eine Differenz zwischen dem ersten Gesamtgewicht und dem zweiten Gesamtgewicht als Gewicht der mehreren Waren zu ermitteln; und einen Preis der mehreren Waren unter Verwendung des gewichtsabhängigen Preises und des Gewichts der mehreren Waren zu ermitteln.

Beispiel 9 ist ein Selbstbedienungsterminal gemäß Beispiel 7 oder 8, wobei die ein oder mehreren Prozessoren eingerichtet sind, wenn ermittelt wird, dass die Warendaten für die Warenart der mehreren Waren einen Stückpreis angeben, den Preis der mehreren Waren unter Verwendung des Stückpreises und einer Warenanzahl der mehreren Waren zu ermitteln.

Beispiel 10 ist eingerichtet gemäß Beispiel 9, wobei die Warendaten ferner für jede Warenart, für die ein Stückpreis angegeben ist, ein jeweiliges Sollgewicht für eine Ware der Warenart angeben; und wobei die ein oder mehreren Prozessoren eingerichtet sind, wenn ermittelt wird, dass die Warendaten für die Warenart der mehreren Waren den Stückpreis angeben: eine Differenz zwischen dem ersten Gesamtgewicht und dem zweiten Gesamtgewicht als Gewicht der mehreren Waren zu ermitteln; ein erwartetes Gewicht der mehreren Waren unter Verwendung der Warenanzahl der mehreren Waren und dem von den Warendaten für eine Ware der Warenart der mehreren Waren angegebenen Sollgewicht zu ermitteln; zu ermitteln, ob eine Differenz zwischen dem erwarteten Gewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, die Warenart als Warenart der mehreren Waren zu verifizieren und den Preis der mehreren Waren unter Verwendung des für diese Warenart von den Warendaten angegebenen Stückpreises und der Warenanzahl der mehreren Waren zu ermitteln.

Beispiel 11 ist ein Selbstbedienungsterminal gemäß einem der Beispiele 7 bis 10, wobei die ein oder mehreren Prozessoren eingerichtet sind: wenn ermittelt wird, dass zumindest eine Ware der mehreren Waren eine von den anderen Waren der mehreren Waren verschiedene Warenart aufweist, Instruktionen an eine Ausgabevorrichtung (z.B. des Selbstbedienungsterminals) bereitzustellen, die einen Benutzer des Selbstbedienungsterminals anweisen, die mehreren Waren zurück auf die Ablagefläche der Waage zu legen und nur Waren gleicher Warenart gleichzeitig von der Ablagefläche der Waage zu entnehmen.

Beispiel 12 ist eingerichtet gemäß einem der Beispiele 1 bis 11, wobei die ein oder mehreren Prozessoren eingerichtet sind: wenn diese die ersten Gewichtsdaten von der Waage empfangen, ein erstes Auslösesignal an den mindestens einen Bildgebungssensor bereitzustellen, welches den mindestens einen Bildgebungssensor dazu veranlasst, das mindestens eine erste Bild der Ablagefläche zu erfassen, und wenn diese die zweiten Gewichtsdaten von der Waage empfangen, ein zweites Auslösesignal an den mindestens einen Bildgebungssensor bereitzustellen, welches den mindestens einen Bildgebungssensor dazu veranlasst, das mindestens eine zweite Bild der Ablagefläche zu erfassen.

Beispiel 13 ist ein Selbstbedienungsterminal gemäß einem der Beispiele 1 bis 11, wobei die Waage eingerichtet ist: wenn diese die ersten Gewichtsdaten erfasst, ein erstes Auslösesignal an den mindestens einen Bildgebungssensor bereitzustellen, welches den mindestens einen Bildgebungssensor dazu veranlasst, das mindestens eine erste Bild der Ablagefläche zu erfassen, und wenn diese die ersten Gewichtsdaten erfasst, ein erstes Auslösesignal an den mindestens einen Bildgebungssensor bereitzustellen, welches den mindestens einen Bildgebungssensor dazu veranlasst, das mindestens eine zweite Bild der Ablagefläche zu erfassen.

Beispiel 14 ist eingerichtet gemäß einem der Beispiele 1 bis 13, wobei die Waage eingerichtet ist, die erfassten Gewichtsdaten an die ein oder mehreren Prozessoren bereitzustellen, sobald eine Schwankung eines erfassten Gewichtswerts für einen vordefinierten Zeitraum kleiner als oder gleich einem vordefinierten Schwankungs-Schwellenwert ist (z.B. der Gewichtswert für den vordefinierten Zeitraum im Wesentlichen stabil ist).

Beispiel 15 ist ein Selbstbedienungsterminal gemäß einem der Beispiele 1 bis 14, wobei die Waage eingerichtet sein, jeweilige Gewichtsdaten zu erfassen und an die ein oder mehreren Prozessoren bereitzustellen, sobald eine Änderung des Gesamtgewichts von auf der Ablagefläche angeordneten Waren größer als oder gleich einem vordefinierten Erfass-Schwellenwert ist; wobei die Waage eingerichtet ist oder die ein oder mehreren Prozessoren eingerichtet sind, in Reaktion auf das Erfassen jeweiliger Gewichtsdaten ein jeweiliges Auslösesignal an den mindestens einen Bildgebungssensor bereitzustellen, welches den mindestens einen Bildgebungssensor dazu veranlasst, ein den jeweiligen Gewichtsdaten zugehöriges Bild der Ablagefläche zu erfassen; und wobei die ein oder mehreren Prozessoren eingerichtet sind, unter Verwendung jeweils erfasster Gewichtsdaten und den jeweils zuvor erfassten Gewichtsdaten zu ermitteln, ob eine oder mehrere Waren von der Ablagefläche entnommen wurden und unter Verwendung der jeweils zugehörigen Bilder zu ermitteln, welche ein oder mehreren Waren jeweils von der Ablagefläche entnommen wurden.

Beispiel 16 ist eingerichtet gemäß Beispiel 15, wobei das Selbstbedienungsterminal eingerichtet ist, die jeweils entnommenen ein oder mehreren Waren zu ermitteln bis keine Waren mehr auf der Ablagefläche der Waage verbleiben.

Beispiel 17 ist eingerichtet gemäß Beispiel 16, wobei die ein oder mehreren Prozessoren eingerichtet sind, ausgehend von den aus dem mindestens einen ersten Bild ermittelten Waren für die jeweils entnommenen ein oder mehreren Waren einen jeweiligen Preis der ein oder mehreren Waren (z.B. gemäß einem der Beispiele 4 bis 10) zu ermitteln und einen Gesamtpreis für die aus dem mindestens einen ersten Bild ermittelten Waren als Summe der ermittelten Preise zu ermitteln.

In Beispiel 18 kann das Selbstbedienungsterminal gemäß Beispiel 17 optional ferner aufweisen: eine Bezahlvorrichtung; wobei die ein oder mehreren Prozessoren eingerichtet sind, Instruktionen zum Bezahlen des Gesamtpreises an die Bezahlvorrichtung bereitzustellen.

In Beispiel 19 kann das Selbstbedienungsterminal gemäß einem der Beispiele 1 bis 18 optional ferner aufweisen: eine Anzeigevorrichtung, die eingerichtet ist, jede Warenart, die mindestens eine Ware der aus dem mindestens einen ersten Bild ermittelten Waren (z.B. bevor eine oder mehrere Waren von der Ablagefläche der Waage entnommen werden) aufweist, anzuzeigen.

Beispiel 20 ist eingerichtet gemäß Beispiel 19, wobei die Anzeigevorrichtung eingerichtet ist, für jede Warenart ferner anzuzeigen: sofern in Kombination mit einem der Beispiele 4 bis 10, den für die ein oder mehreren Waren ermittelten Preis; und/oder eine Anzahl an Waren, die in den aus dem mindestens einen ersten Bild ermittelten Waren die jeweilige Warenart aufweisen; und/oder sofern in Kombination mit einem der Beispiele 3 bis 10, den der jeweiligen Warenart zugeordneten Stückpreis oder gewichtsabhängigen Preis; und/oder sofern in Kombination mit Beispiel 17, den ermittelten Gesamtpreis.

Beispiel 21 ist eingerichtet gemäß einem der Beispiele 1 bis 20, wobei die Waage derart eingerichtet ist, dass ein Einkaufskorb, in dem die Waren angeordnet werden können, auf der Ablagefläche angeordnet werden kann.

Beispiel 22 ist ein Selbstbedienungsterminal gemäß einem der Beispiele 1 bis 21, wobei der mindestens eine Bildgebungssensor eine Kamera und/oder eine Videokamera aufweist.

Beispiel 23 ist eine Selbstbedienungsterminal, aufweisend: eine Waage mit einer Ablagefläche, auf der Waren angeordnet werden können, wobei die Waage eingerichtet ist, Gewichtsdaten zu erfassen, welche ein Gesamtgewicht von auf der Ablagefläche angeordneten Waren angeben; mindestens einen Bildgebungssensor, der eingerichtet ist, Bilder einer Umgebung des Selbstbedienungsterminals über der Ablagefläche der Waage zu erfassen; einen oder mehrere Prozessoren, die eingerichtet sind: erste Gewichtsdaten von der Waage zu empfangen, wobei die ersten Gewichtsdaten ein erstes Gesamtgewicht von Waren, die sich auf der Ablagefläche befinden, angeben; zweite Gewichtsdaten von der Waage zu empfangen, wobei die zweiten Gewichtsdaten ein zweites Gesamtgewicht von Waren, die sich auf der Ablagefläche befinden, angeben; unter Verwendung der ersten Gewichtsdaten und der zweiten Gewichtsdaten zu ermitteln, ob eine Ware von der Ablagefläche entnommen wurde; wenn ermittelt wird, dass (genau) eine Ware von der Ablagefläche entnommen wurde, aus mindestens einem Bild des mindestens einen Bildgebungssensors (z.B. mittels semantischer Bildsegmentierung) zu ermitteln, ob sich eine Ware und wenn ja welche Ware sich in einer Hand eines Benutzers des Selbstbedienungsterminals befindet; und die Ware, die sich in der Hand des Benutzers des Selbstbedienungsterminals befindet, als die von der Ablagefläche entnommene Ware zu ermitteln.

Beispiel 24 ist eingerichtet gemäß Beispiel 23, wobei die Waage derart eingerichtet ist, dass ein Einkaufskorb auf der Ablagefläche angeordnet werden kann, in dem sich die auf der Ablagefläche angeordneten Waren befinden können.

Beispiel 25 ist ein Selbstbedienungsterminal gemäß Beispiel 23 oder 24, wobei die ein oder mehreren Prozessoren eingerichtet sind, zu ermitteln, ob Warendaten, die für jede Ware jeweils einen gewichtsabhängigen Preis oder einen Stückpreis angeben, für die entnommene Ware einen gewichtsabhängigen Preis oder einen Stückpreis angeben.

Beispiel 26 ist eingerichtet gemäß Beispiel 25, wobei die ein oder mehreren Prozessoren eingerichtet sind, wenn ermittelt wird, dass die Warendaten für die entnommene Ware einen gewichtsabhängigen Preis angeben: eine Differenz zwischen dem ersten Gesamtgewicht und dem zweiten Gesamtgewicht als Gewicht der entnommenen Ware zu ermitteln; und einen Preis der entnommenen Ware unter Verwendung des gewichtsabhängigen Preises und des Gewichts der entnommenen Ware zu ermitteln.

Beispiel 27 ist ein Selbstbedienungsterminal gemäß Beispiel 25 oder 26, wobei die ein oder mehreren Prozessoren eingerichtet sind, wenn ermittelt wird, dass die Warendaten für die entnommene Ware einen Stückpreis angeben, den Stückpreis als Preis der entnommenen Ware zu ermitteln.

Beispiel 28 ist eingerichtet gemäß Beispiel 27, wobei die Warendaten ferner für jede Ware, für die ein Stückpreis angegeben ist, ein jeweiliges Sollgewicht einer solchen Ware angeben; und wobei die ein oder mehreren Prozessoren eingerichtet sind, wenn ermittelt wird, dass die Warendaten für die entnommene Ware einen Stückpreis angeben: eine Differenz zwischen dem ersten Gesamtgewicht und dem zweiten Gesamtgewicht als Gewicht der entnommenen Ware zu ermitteln; zu ermitteln, ob eine Differenz zwischen dem von den Warendaten angegebenen Sollgewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, die aus dem mindestens einen Bild ermittelte entnommene Ware zu verifizieren und den Stückpreis als Preis der entnommenen Ware zu ermitteln.

Beispiel 29 ist ein Selbstbedienungsterminal gemäß einem der Beispiele 23 bis 28, wobei die ein oder mehreren Prozessoren eingerichtet sind: wenn diese die ersten Gewichtsdaten von der Waage empfangen, ein erstes Auslösesignal an den mindestens einen Bildgebungssensor bereitzustellen, welches den mindestens einen Bildgebungssensor dazu veranlasst, das mindestens eine erste Bild der Ablagefläche zu erfassen, und wenn diese die zweiten Gewichtsdaten von der Waage empfangen, ein zweites Auslösesignal an den mindestens einen Bildgebungssensor bereitzustellen, welches den mindestens einen Bildgebungssensor dazu veranlasst, das mindestens eine zweite Bild der Ablagefläche zu erfassen.

Beispiel 30 ist eingerichtet gemäß einem der Beispiele 23 bis 28, wobei die Waage eingerichtet ist: wenn diese die ersten Gewichtsdaten erfasst, ein erstes Auslösesignal an den mindestens einen Bildgebungssensor bereitzustellen, welches den mindestens einen Bildgebungssensor dazu veranlasst, das mindestens eine erste Bild der Ablagefläche zu erfassen, und wenn diese die ersten Gewichtsdaten erfasst, ein erstes Auslösesignal an den mindestens einen Bildgebungssensor bereitzustellen, welches den mindestens einen Bildgebungssensor dazu veranlasst, das mindestens eine zweite Bild der Ablagefläche zu erfassen.

Beispiel 31 ist ein Selbstbedienungsterminal gemäß einem der Beispiele 23 bis 30, wobei die Waage eingerichtet ist, die erfassten Gewichtsdaten an die ein oder mehreren Prozessoren bereitzustellen, sobald eine Schwankung eines erfassten Gewichtswerts für einen vordefinierten Zeitraum kleiner als oder gleich einem vordefinierten Schwankungs-Schwellenwert ist (z.B. der Gewichtswert für den vordefinierten Zeitraum im Wesentlichen stabil ist).

Beispiel 32 ist eingerichtet gemäß einem der Beispiele 23 bis 31, wobei die Waage eingerichtet sein, jeweilige Gewichtsdaten zu erfassen und an die ein oder mehreren Prozessoren bereitzustellen, sobald eine Änderung des Gesamtgewichts von auf der Ablagefläche angeordneten Waren größer als oder gleich einem vordefinierten Erfass-Schwellenwert ist; wobei die Waage eingerichtet ist oder die ein oder mehreren Prozessoren eingerichtet sind, in Reaktion auf das Erfassen jeweiliger Gewichtsdaten ein jeweiliges Auslösesignal an den mindestens einen Bildgebungssensor bereitzustellen, welches den mindestens einen Bildgebungssensor dazu veranlasst, ein den jeweiligen Gewichtsdaten zugehöriges Bild der Ablagefläche zu erfassen; und wobei die ein oder mehreren Prozessoren eingerichtet sind, unter Verwendung jeweils erfasster Gewichtsdaten und den jeweils zuvor erfassten Gewichtsdaten zu ermitteln, ob eine Ware von der Ablagefläche entnommen wurde und unter Verwendung der jeweils zugehörigen Bilder zu ermitteln, welche Ware jeweils entnommen wurde.

Beispiel 33 ist eingerichtet gemäß Beispiel 32, wobei das Selbstbedienungsterminal eingerichtet ist, die jeweils entnommenen ein oder mehreren Waren zu ermitteln bis keine Waren mehr auf der Ablagefläche der Waage verbleiben.

Beispiel 34 ist eingerichtet gemäß den Beispielen 24 und 33, wobei die ein oder mehreren Prozessoren eingerichtet sind: aus dem mindestens einen Bild oder einem anderen Bild des mindestens einen Bildgebungssensors zu ermitteln, ob die Waren, die sich auf der Ablagefläche befinden, direkt auf der Ablagefläche liegen oder in dem Einkaufkorb angeordnet sind; und wenn ermittelt wird, dass die Waren in dem Einkaufkorb angeordnet sind, zu ermitteln, dass keine Waren mehr auf der Ablagefläche der Waage angeordnet sind, wenn das mittels der Waage erfasste Gesamtgewicht im Wesentlichen einem für den Einkaufskorb vordefinierten Gewichtswert entspricht.

Beispiel 35 ist ein Selbstbedienungsterminal gemäß Beispiel 33 oder 34, wobei die ein oder mehreren Prozessoren eingerichtet sind, ausgehend von einer Vielzahl von Waren einen jeweiligen Preis der jeweils entnommenen Ware zu ermitteln und einen Gesamtpreis für die Vielzahl von Waren als Summe der ermittelten Preise zu ermitteln.

In Beispiel 36 kann das Selbstbedienungsterminal gemäß Beispiel 35 optional ferner aufweisen: eine Bezahlvorrichtung; wobei die ein oder mehreren Prozessoren eingerichtet sind, Instruktionen zum Bezahlen des Gesamtpreises an die Bezahlvorrichtung bereitzustellen.

In Beispiel 37 kann das Selbstbedienungsterminal gemäß einem der Beispiele 23 bis 36 optional ferner aufweisen: eine Anzeigevorrichtung, die eingerichtet ist, eine Warenart der entnommenen Ware anzuzeigen.

Beispiel 38 ist eingerichtet gemäß Beispiel 37, wobei die Anzeigevorrichtung eingerichtet ist, anzuzeigen: sofern in Kombination mit einem der Beispiele 26 bis 28, den für die entnommene Ware ermittelten Preis; und/oder sofern in Kombination mit Beispiel 27 oder 28, den zugeordneten Stückpreis oder gewichtsabhängigen Preis; und/oder sofern in Kombination mit Beispiel 35, den ermittelten Gesamtpreis.

Beispiel 39 ist eingerichtet gemäß einem der Beispiele 23 bis 38, wobei der mindestens eine Bildgebungssensor eine Kamera und/oder eine Videokamera aufweist.

Beispiel 40 ist ein Selbstbedienungsterminal gemäß einem der Beispiele 23 bis 39, wobei der mindestens eine Bildgebungssensor ferner eingerichtet ist, Ablagefläche-Bilder der Ablagefläche der Waage zu erfassen; wobei die ein oder mehreren Prozessoren eingerichtet sind: aus mindestens einem von dem mindestens einen Bildgebungssensor empfangenen und vor dem mindestens einen Bild erfassten ersten Ablagefläche-Bild zu ermitteln, welche ein oder mehreren ersten Waren der sich auf der Ablagefläche (z.B. in dem Einkaufskorb) befindenden Waren das erste Ablagefläche-Bild zeigt; aus mindestens einem von dem mindestens einen Bildgebungssensor empfangenen und nach dem mindestens einen Bild erfassten zweiten Ablagefläche-Bild zu ermitteln, welche ein oder mehreren zweiten Waren das zweite Ablagefläche-Bild zeigt; unter Verwendung der ein oder mehreren ersten Waren und der ein oder mehreren zweiten Waren zu ermitteln, welche Ware von der Ablagefläche entnommen wurden; und wenn die unter Verwendung der ein oder mehreren ersten Waren und der ein oder mehreren zweiten Waren ermittelte entnommene Ware der aus dem mindestens einen Bild ermittelten entnommenen Ware entspricht, die entnommene Ware zu verifizieren.

Beispiel 41 ist eingerichtet gemäß einem der Beispiele 23 bis 40, wobei die aus dem mindestens einen Bildes ermittelte Ware eine erste Warenart hat; wobei das Selbstbedienungsterminal eine Scanner-Einheit zum Erfassen von Barcodes aufweist; wobei die ein oder mehreren Prozessoren eingerichtet sind: wenn ein Barcode der entnommenen Ware mittels der Scanner-Einheit erfasst wird, Informationen, die den erfassten Barcode repräsentieren, von der Scanner-Einheit zu empfangen und anhand des erfassten Barcodes eine zweite Warenart der entnommenen Ware zu ermitteln; und die erste Warenart als Warenart der entnommenen Ware zu verifizieren, wenn die erste Warenart der zweiten Warenart entspricht.

Beispiel 42 ist eingerichtet gemäß einem der Beispiele 23 bis 40, wobei das Selbstbedienungsterminal keine Scanner-Einheit aufweist.

Beispiel 43 ist eingerichtet gemäß einem der Beispiele 23 bis 42, wobei das Selbstbedienungsterminal keine andere Waage (z.B. keine Verifizierungswaage) aufweist.

Beispiel 44 ist ein Verfahren, aufweisend: Ermitteln, aus mindestens einem ersten Bild einer Ablagefläche einer Waage, welche Waren auf der Ablagefläche angeordnet sind; Ermitteln, unter Verwendung erster Gewichtsdaten, welche ein erstes Gesamtgewicht der Waren, die sich auf der Ablagefläche befinden, angeben, und zweiter Gewichtsdaten, welche ein zweites Gesamtgewicht von Waren, die sich auf der Ablagefläche befinden, angeben, ob eine oder mehrere Waren von der Ablagefläche entnommen wurden; und Ermitteln aus mindestens einem zweiten Bild der Ablagefläche, welche ein oder mehreren Waren von der Ablagefläche entnommen wurden.

Beispiel 45 ist eingerichtet gemäß Beispiel 44, wobei das zweite Gesamtgewicht ein Gesamtgewicht der Waren angibt, die bei einem Erfassen des mindestens einen zweiten Bildes auf der Ablagefläche angeordnet sind.

Beispiel 46 ist ein Verfahren gemäß Beispiel 44 oder 45, ferner aufweisend: wenn aus dem mindestens einen zweiten Bild ermittelt wird, dass (genau) eine Ware von der Ablagefläche entnommen wurde, Ermitteln, ob Warendaten, die für jede Ware jeweils einen gewichtsabhängigen Preis oder einen Stückpreis angeben, für die entnommene Ware einen gewichtsabhängigen Preis oder einen Stückpreis angeben.

In Beispiel 47 kann das Verfahren gemäß Beispiel 46 optional ferner aufweisen: wenn ermittelt wird, dass die Warendaten für die entnommene Ware einen gewichtsabhängigen Preis angeben: Ermitteln einer Differenz zwischen dem ersten Gesamtgewicht und dem zweiten Gesamtgewicht als Gewicht der entnommenen Ware; und Ermitteln eines Preises der entnommenen Ware unter Verwendung des gewichtsabhängigen Preises und des Gewichts der entnommenen Ware zu ermitteln.

In Beispiel 48 kann das Verfahren gemäß Beispiel 46 oder 47 optional ferner aufweisen: wenn ermittelt wird, dass die Warendaten für die entnommene Ware einen Stückpreis angeben, Ermitteln des Stückpreises als Preis der entnommenen Ware.

Beispiel 49 ist eingerichtet gemäß Beispiel 48, wobei die Warendaten ferner für jede Ware, für die ein Stückpreis angegeben ist, ein jeweiliges Sollgewicht einer solchen Ware angeben; und wobei, wenn ermittelt wird, dass die Warendaten für die entnommene Ware einen Stückpreis angeben, das Verfahren ferner aufweist: Ermitteln einer Differenz zwischen dem ersten Gesamtgewicht und dem zweiten Gesamtgewicht als Gewicht der entnommenen Ware; Ermitteln, ob eine Differenz zwischen dem von den Warendaten angegebenen Sollgewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, Verifizieren der aus dem mindestens einen zweiten Bild ermittelten entnommenen Ware und Ermitteln des Stückpreises als Preis der entnommenen Ware.

In Beispiel 50 kann das Verfahren gemäß einem der Beispiele 44 bis 49 optional ferner aufweisen: wenn aus dem mindestens einen zweiten Bild ermittelt wird, dass mehrere Waren von der Ablagefläche entnommen wurden: Ermitteln, ob jede Ware der mehreren Waren einer gleichen Warenart angehört; und wenn ermittelt wird, dass jede Ware der mehreren Waren der gleichen Warenart angehört, Ermitteln, ob die Warendaten, die für jede Warenart jeweils einen gewichtsabhängigen Preis oder einen Stückpreis angeben, für die Warenart der mehreren Waren einen gewichtsabhängigen Preis oder einen Stückpreis angeben.

In Beispiel 51 kann das Verfahren gemäß Beispiel 50 optional ferner aufweisen: wenn ermittelt wird, dass die Warendaten für die Warenart der mehreren Waren einen gewichtsabhängigen Preis angeben: Ermitteln einer Differenz zwischen dem ersten Gesamtgewicht und dem zweiten Gesamtgewicht als Gewicht der mehreren Waren; und Ermitteln eines Preises der mehreren Waren unter Verwendung des gewichtsabhängigen Preises und des Gewichts der mehreren Waren.

In Beispiel 52 kann das Verfahren gemäß Beispiel 50 oder 51 optional ferner aufweisen: wenn ermittelt wird, dass die Warendaten für die Warenart der mehreren Waren einen Stückpreis angeben, Ermitteln des Preises der mehreren Waren unter Verwendung des Stückpreises und einer Warenanzahl der mehreren Waren.

Beispiel 53 ist eingerichtet gemäß Beispiel 52, wobei die Warendaten ferner für jede Warenart, für die ein Stückpreis angegeben ist, ein jeweiliges Sollgewicht für eine Ware der Warenart angeben; und wobei, wenn ermittelt wird, dass die Warendaten für die Warenart der mehreren Waren den Stückpreis angeben, das Verfahren ferner aufweist: Ermitteln einer Differenz zwischen dem ersten Gesamtgewicht und dem zweiten Gesamtgewicht als Gewicht der mehreren Waren; Ermitteln eines erwarteten Gewichts der mehreren Waren unter Verwendung der Warenanzahl der mehreren Waren und dem von den Warendaten für eine Ware der Warenart der mehreren Waren angegebenen Sollgewicht; Ermitteln, ob eine Differenz zwischen dem erwarteten Gewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, Verifizieren der Warenart als Warenart der mehreren Waren und Ermitteln des Preises der mehreren Waren unter Verwendung des für diese Warenart von den Warendaten angegebenen Stückpreises und der Warenanzahl der mehreren Waren.

In Beispiel 54 kann das Verfahren gemäß einem der Beispiele 50 bis 53 optional ferner aufweisen: wenn ermittelt wird, dass zumindest eine Ware der mehreren Waren eine von den anderen Waren der mehreren Waren verschiedene Warenart aufweist, Bereitstellen von Instruktionen, die einen Benutzer anweisen, die mehreren Waren zurück auf die Ablagefläche der Waage zu legen und nur Waren gleicher Warenart gleichzeitig von der Ablagefläche der Waage zu entnehmen.

In Beispiel 55 kann das Verfahren gemäß einem der Beispiele 44 bis 54 optional ferner aufweisen: Erfassen jeweiliger Gewichtsdaten, sobald eine Änderung des Gesamtgewichts von auf der Ablagefläche angeordneten Waren größer als oder gleich einem vordefinierten Erfass-Schwellenwert ist; in Reaktion auf das Erfassen jeweiliger Gewichtsdaten, Erfassen eines den jeweiligen Gewichtsdaten zugehörigen Bildes der Ablagefläche; und Ermitteln, unter Verwendung jeweils erfasster Gewichtsdaten und den jeweils zuvor erfassten Gewichtsdaten, ob eine oder mehrere Waren von der Ablagefläche entnommen wurden, und Ermitteln, unter Verwendung der jeweils zugehörigen Bilder, welche ein oder mehreren Waren jeweils von der Ablagefläche entnommen wurden.

Beispiel 56 ist eingerichtet gemäß Beispiel 55, wobei die jeweiligen Gewichtsdaten erfasst werden bis keine Waren mehr auf der Ablagefläche der Waage verbleiben.

In Beispiel 57 kann das Verfahren gemäß Beispiel 56 optional ferner aufweisen: Ermitteln, ausgehend von den aus dem mindestens einen ersten Bild ermittelten Waren, eines jeweiligen Preises der jeweils entnommenen ein oder mehreren Waren und Ermitteln eines Gesamtpreises für die aus dem mindestens einen ersten Bild ermittelten Waren als Summe der ermittelten Preise.

Beispiel 58 ist ein Verfahren, aufweisend: Ermitteln, unter Verwendung erster Gewichtsdaten, welche ein erstes Gesamtgewicht von Waren, die sich auf einer Ablagefläche einer Waage befinden, angeben, und zweiter Gewichtsdaten, welche ein zweites Gesamtgewicht von Waren, die sich auf der Ablagefläche befinden, angeben, ob eine Ware von der Ablagefläche entnommen wurde; Ermitteln aus mindestens einem Bild einer Umgebung über der Ablagefläche, ob sich eine Ware und wenn ja welche Ware sich in einer Hand eines Benutzers befindet; und Ermitteln der Ware, die sich in der Hand des Benutzers befindet, als die von der Ablagefläche entnommene Ware.

In Beispiel 59 kann das Verfahren gemäß Beispiel 58 optional ferner aufweisen: Ermitteln, ob Warendaten, die für jede Ware jeweils einen gewichtsabhängigen Preis oder einen Stückpreis angeben, für die entnommene Ware einen gewichtsabhängigen Preis oder einen Stückpreis angeben.

In Beispiel 60 kann das Verfahren gemäß Beispiel 59 optional ferner aufweisen: wenn ermittelt wird, dass die Warendaten für die entnommene Ware einen gewichtsabhängigen Preis angeben: Ermitteln einer Differenz zwischen dem ersten Gesamtgewicht und dem zweiten Gesamtgewicht als Gewicht der entnommenen Ware; und Ermitteln eines Preises der entnommenen Ware unter Verwendung des gewichtsabhängigen Preises und des Gewichts der entnommenen Ware.

In Beispiel 61 kann das Verfahren gemäß Beispiel 59 oder 60 optional ferner aufweisen: wenn ermittelt wird, dass die Warendaten für die entnommene Ware einen Stückpreis angeben, Ermitteln des Stückpreises als Preis der entnommenen Ware.

Beispiel 62 ist eingerichtet gemäß Beispiel 61, wobei die Warendaten ferner für jede Ware, für die ein Stückpreis angegeben ist, ein jeweiliges Sollgewicht einer solchen Ware angeben; und wobei, wenn ermittelt wird, dass die Warendaten für die entnommene Ware einen Stückpreis angeben, das Verfahren ferner aufweist: Ermitteln einer Differenz zwischen dem ersten Gesamtgewicht und dem zweiten Gesamtgewicht als Gewicht der entnommenen Ware; Ermitteln, ob eine Differenz zwischen dem von den Warendaten angegebenen Sollgewicht und dem aus der Differenz des ersten Gesamtgewichts und des zweiten Gesamtgewichts ermittelten Gewicht kleiner als oder gleich einem vordefinierten Verifizierungs-Schwellenwert ist; und wenn ermittelt wird, dass die Differenz kleiner als oder gleich dem vordefinierten Verifizierungs-Schwellenwert ist, Verifizieren der aus dem mindestens einen Bild ermittelten entnommenen Ware und Ermitteln des Stückpreises als Preis der entnommenen Ware.

In Beispiel 63 kann das Verfahren gemäß einem der Beispiele 58 bis 62 optional ferner aufweisen: Erfassen jeweiliger Gewichtsdaten, sobald eine Änderung des Gesamtgewichts von auf der Ablagefläche angeordneten Waren größer als oder gleich einem vordefinierten Erfass-Schwellenwert ist; in Reaktion auf das Erfassen jeweiliger Gewichtsdaten, Erfassen eines den jeweiligen Gewichtsdaten zugehörigen Bildes der Ablagefläche; und Ermitteln, unter Verwendung jeweils erfasster Gewichtsdaten und den jeweils zuvor erfassten Gewichtsdaten, ob eine Ware von der Ablagefläche entnommen wurde, und Ermitteln, unter Verwendung der jeweils zugehörigen Bilder, welche Ware jeweils entnommen wurde.

Beispiel 64 ist eingerichtet gemäß Beispiel 63, wobei die jeweiligen Gewichtsdaten erfasst werden bis keine Waren mehr auf der Ablagefläche der Waage verbleiben.

Beispiel 65 ist ein Verfahren gemäß Beispielen 58 und 64, ferner aufweisend: Ermitteln, aus dem mindestens einen Bild oder einem anderen Bild des mindestens einen Bildgebungssensors, ob die Waren, die sich auf der Ablagefläche befinden, direkt auf der Ablagefläche liegen oder in dem Einkaufkorb angeordnet sind; und wenn ermittelt wird, dass die Waren in dem Einkaufkorb angeordnet sind, Ermitteln, dass keine Waren mehr auf der Ablagefläche der Waage angeordnet sind, wenn das mittels der Waage erfasste Gesamtgewicht im Wesentlichen einem für den Einkaufskorb vordefinierten Gewichtswert entspricht.

In Beispiel 66 kann das Verfahren gemäß einem der Beispiele 58 bis 65 optional ferner aufweisen: Ermitteln, aus mindestens einem vor dem mindestens einen Bild erfassten ersten Bild der Ablagefläche, welche ein oder mehreren ersten Waren der sich auf der Ablagefläche (z.B. in dem Einkaufskorb) befindenden Waren das erste Bild zeigt; Ermitteln, aus mindestens einem nach dem mindestens einen Bild erfassten zweiten Bild der Ablagefläche welche ein oder mehreren zweiten Waren das zweite Bild zeigt; Ermitteln, unter Verwendung der ein oder mehreren ersten Waren und der ein oder mehreren zweiten Waren, welche Ware von der Ablagefläche entnommen wurden; und Verifizieren der entnommenen Ware, wenn die unter Verwendung der ein oder mehreren ersten Waren und der ein oder mehreren zweiten Waren ermittelte entnommene Ware der aus dem mindestens einen Bild ermittelten entnommenen Ware entspricht.

Beispiel 67 ist eingerichtet gemäß einem der Beispiele 58 bis 66, wobei die aus dem mindestens einen Bildes ermittelte Ware eine erste Warenart hat; wobei das Verfahren ferner aufweist: Erfassen eines Barcodes der entnommenen Ware und Ermitteln einer zweiten Warenart der entnommenen Ware unter Verwendung des erfassten Barcodes; und Verifizieren der ersten Warenart als Warenart der entnommenen Ware, wenn die erste Warenart der zweiten Warenart entspricht.

Beispiel 68 ist ein computerlesbares Medium (z.B. ein Computerprogrammprodukt, ein nichtflüchtiges Speichermedium, ein nichttransitorisches Speichermedium, ein nichtvolatiles Speichermedium), welches Instruktionen speichert, die bei Ausführung durch einen Prozessor bewirken, dass der Prozessor ein Selbstbedienungsterminal steuert, um das Verfahren gemäß einem der Beispiele 44 bis 67 durchzuführen.

Der Begriff "Prozessor", wie hierin verwendet, kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Es wird verstanden, dass, wenn wie hierin beschrieben, eine Vorrichtung Daten an eine andere Vorrichtung bereitstellt bzw. eine Vorrichtung Daten von einer anderen Vorrichtung empfängt, diese Daten direkt oder indirekt an die jeweilige Vorrichtung übertragen werden können. Bei einer indirekten Übertragung können die Daten zum Beispiel in der Speichervorrichtung gespeichert werden und eine Vorrichtung kann die Daten aus der Speichervorrichtung auslesen.

Verschiedene hierin beschriebene Aspekte beziehen sich auf erfasste Bilder. Diese Bilder können digitale Bilder sein. Digitalen Bilder können jede Art von digitalen Bilddaten sein und können ein digitales Abbild der Realität (z.B. des Erfassungsbereichs) zu einem Zeitpunkt des Erfassens der digitalen Bilddaten sein. Die Abbildung der Realität kann beispielsweise mittels eines Objektivs erfolgen, welches Licht auf die Oberfläche eines Bildgebungssensors (z.B. eines Bayer-Sensors) projiziert. Das Erfassen der Bilddaten kann aufweisen, den Bildgebungssensor auszulesen während das Licht auf dessen Oberfläche projiziert wird. Die so erhaltenen Bilddaten können zunächst im sogenannten Rohdatenformat (auch als RAW bezeichnet) sein, welches bildpunktweise die ausgelesenen Messwerte des Bildgebungssensors aufweist und/oder als solche verarbeitet werden. Die Bilddaten können optional beim Verarbeiten in ein anderes Bildformat überführt sein oder werden, z.B. in eine Rastergrafik (verschieden von RAW als Rastergrafik) oder eine Vektorgrafik, so dass deren weitere Verarbeitung in diesem Bildformat erfolgt, oder können beliebig zwischen diesen umgewandelt werden. Das Überführen kann optional aufweisen, die Messwerte des Bildgebungssensors zu interpolieren (z.B. mittels Demosaickings), z.B. um vollständige mehrfarbige Farbinformationen für jeden Bildpunkt von mehreren Bildpunkten zu erhalten oder um weniger Speicherplatz bzw. Rechenleistung zu benötigen. Die Bilddaten können optional komprimiert (z.B. um weniger Speicherplatz bzw. Rechenleistung zu benötigen) oder unkomprimiert (z.B. um Verfälschungen zu vermeiden) sein. Das jeweilige Bildformat kann auch den Farbraum definieren, gemäß dem die Farbinformationen angegeben sind.

Der einfachste Fall ist ein Binär-Farbraum, bei dem pro Bildpunkt ein Schwarzweiß-Wert abgespeichert wird. Bei einem etwas komplexeren Farbraum (auch als Graustufen-Farbraum bezeichnet) werden Zwischenstufen zwischen Schwarz und Weiß abgespeichert (auch als Grauwerte bezeichnet). Der Farbraum kann aber auch von mehreren (z.B. zwei oder mehr) Grundfarben aufgespannt werden, wie beispielsweise rot, grün und blau. Sollen die Messwerte beispielsweise mehrfarbige Farbinformationen aufweisen, kann ein wellenlängensensitiver Bildgebungssensor verwendet werden. Dessen Messwerte können beispielsweise gemäß einem Farbraum kodiert sein. Die Farbinformationen bzw. der zugrundeliegende Farbraum können daher mehrfarbig (auch als polychrom bezeichnet) oder auch einfarbig (auch als monochrom bezeichnet) sein. Die monochrome Farbinformationen kann beispielsweise nur Grauwerte aufweisen (dann auch als Grauwertinformationen bezeichnet) oder Schwarzweiß-Werte aufweisen (dann auch als Schwarzweißwertinformationen bezeichnet), welche die Intensität der erfassten Strahlung bei der Wellenlänge bzw. dem Wellenlängenbereich repräsentieren, bei welcher der monochrome Sensor sensitiv ist. Für eine visuelle Wiedergabe der Bilddaten auf einer Anzeigevorrichtung werden diese in dasjenige Bildformat überführt, das vom Bildspeicher der Grafikkarte vorgegeben ist. Die hierin beschriebenen Bilddaten werden zum einfacheren Verständnis als eine solche visuelle Wiedergabe dargestellt. Im Allgemeinen können die Bilddaten, z.B. abgelegt in einem Speichermedium, als Datei (auch als digitales Bild oder Bilddatei bezeichnet) in dem jeweiligen Bildformat vorliegen.

Den Bilddaten können ferner (z.B. alternativ oder zusätzlich zu den Farbinformationen) Tiefeninformationen (auch als 3D-Informationen bezeichnet) zugeordnet sein. Zum Erfassen der Tiefeninformationen kann eine 3D-Kamera als Bildgebungssensor verwendet werden. Die Messwerte der 3D-Kamera können (z.B. bildpunktweise) Informationen zu einer Topografie der abgebildeten Realität (auch als Tiefeninformationen bezeichnet) aufweisen. Beispielsweise können die Tiefeninformationen angeben, welchen Abstand ein oder jeder Bildpunkt der Kamera von einem Ort im Raum aufweist, der auf dem Bildpunkt abgebildet wird. Anders ausgedrückt kann ein Abstand eines Objektes bzw. können Abstände mehrerer Objekte unter Verwendung der Tiefeninformationen ermittelt werden. Die Tiefeninformationen können anschaulich den von den Bilddaten abgebildeten zwei räumlichen Dimensionen eine dritte räumliche Dimension (hierin als Tiefe bezeichnet) hinzufügen. Beispielsweise kann ein Objekt mittels der Bilddaten als Projektion auf die zweidimensionale Oberfläche des Bildsensors bzw. des Bildgebungssensors repräsentiert sein (auch als 2D-Bilddaten bezeichnet). Die Tiefeninformationen spannen hierzu die dritte räumliche Dimension auf. Beispielsweise können die Tiefeninformationen den Bilddaten segmentweise (d.h. für jedes Segment der Bilddaten) zugeordnete Werte (auch als Tiefenwerte bezeichnet) aufweisen, welche deren Tiefe angeben. Beispielsweise können die Tiefeninformationen den Bilddaten bildpunktweise (d.h. für jeden Bildpunkt der Bilddaten) zugeordnete Tiefenwerte aufweisen, welche die Tiefe angeben.

Der hierin beschriebene mindestens eine Bildgebungssensor 106 kann jede Art von geeigneter Kamera und/oder Videokamera sein. Ein Bildgebungssensor (auch als Bildsensor bezeichnet) ist vom Typ des optischen Sensors und kann einen oder mehrere photoelektrisch aktive Bereiche (kann auch als Bildpunkt bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bildgebungssensor kann beispielsweise ein CCD-Sensor (charge-coupled device Sensor) und/oder einen aktiven Bildpunktsensor bzw. aktiven Pixelsensor (kann auch als CMOS-Sensor bezeichnet werden) aufweisen oder daraus gebildet sein. Optional kann ein Bildgebungssensor wellenlängensensitiv eingerichtet sein (z.B. zum Erfassen von Farbinformationen), z.B. mittels mehrerer Farbfilter (z.B. in Gitterform), und so zwischen verschiedenen Wellenlängen unterscheiden.

## Patentansprüche

1. Selbstbedienungsterminal (100), aufweisend:
• eine Waage (102) mit einer Ablagefläche (104), auf der Waren angeordnet werden können, wobei die Waage (102) eingerichtet ist, Gewichtsdaten zu erfassen, welche ein Gesamtgewicht von auf der Ablagefläche (104) angeordneten Waren angeben;
• mindestens einen Bildgebungssensor (106), der eingerichtet ist, Bilder der Ablagefläche (104) der Waage (102) zu erfassen;
• einen oder mehrere Prozessoren (110), die eingerichtet sind:
∘ aus mindestens einem ersten Bild des mindestens einen Bildgebungssensors (106) zu ermitteln, welche Waren auf der Ablagefläche (104) angeordnet sind;
∘ erste Gewichtsdaten von der Waage (102) zu empfangen, wobei die ersten Gewichtsdaten ein erstes Gesamtgewicht der Waren, die sich auf der Ablagefläche (104) befinden, angeben;
∘ zweite Gewichtsdaten von der Waage (102) zu empfangen, wobei die zweiten Gewichtsdaten ein zweites Gesamtgewicht von Waren, die sich auf der Ablagefläche (104) befinden, angeben; **dadurch gekennzeichnet, dass**
∘ unter Verwendung der ersten Gewichtsdaten und der zweiten Gewichtsdaten ermittelt wird, ob eine oder mehrere Waren von der Ablagefläche (104) entnommen wurden; und dass
∘ aus mindestens einem zweiten Bild des mindestens einen Bildgebungssensors (106) ermittelt wird, welche eine oder mehreren Waren von der Ablagefläche (104) entnommen wurden.

2. Selbstbedienungsterminal (100) gemäß Anspruch 1,
wobei die ein oder mehreren Prozessoren (110) eingerichtet sind, wenn aus dem mindestens einen zweiten Bild ermittelt wird, dass eine Ware von der Ablagefläche (104) entnommen wurde, zu ermitteln, ob Warendaten (212), die für jede Ware jeweils einen gewichtsabhängigen Preis oder einen Stückpreis angeben, für die entnommene Ware einen gewichtsabhängigen Preis oder einen Stückpreis angeben; und
wobei die ein oder mehreren Prozessoren (110) optional ferner eingerichtet sind:
• wenn ermittelt wird, dass die Warendaten (212) für die entnommene Ware einen gewichtsabhängigen Preis angeben, eine Differenz zwischen dem ersten Gesamtgewicht und dem zweiten Gesamtgewicht als Gewicht der entnommenen Ware zu ermitteln, und einen Preis der entnommenen Ware unter Verwendung des gewichtsabhängigen Preises und des Gewichts der entnommenen Ware zu ermitteln; und/oder
• wenn ermittelt wird, dass die Warendaten (212) für die entnommene Ware einen Stückpreis angeben, den Stückpreis als Preis der entnommenen Ware zu ermitteln.

3. Selbstbedienungsterminal (100) gemäß Anspruch 1 oder 2, wobei die ein oder mehreren Prozessoren (110) eingerichtet sind, wenn aus dem mindestens einen zweiten Bild ermittelt wird, dass mehrere Waren von der Ablagefläche (104) entnommen wurden, zu ermitteln, ob jede Ware der mehreren Waren einer gleichen Warenart angehört; und wenn ermittelt wird, dass jede Ware der mehreren Waren der gleichen Warenart angehört, zu ermitteln, ob die Warendaten (212), die für jede Warenart jeweils einen gewichtsabhängigen Preis oder einen Stückpreis angeben, für die Warenart der mehreren Waren einen gewichtsabhängigen Preis oder einen Stückpreis angeben; und
wobei die ein oder mehreren Prozessoren (110) optional ferner eingerichtet sind:
• wenn ermittelt wird, dass die Warendaten (212) für die Warenart der mehreren Waren einen gewichtsabhängigen Preis angeben, eine Differenz zwischen dem ersten Gesamtgewicht und dem zweiten Gesamtgewicht als Gewicht der mehreren Waren zu ermitteln, und einen Preis der mehreren Waren unter Verwendung des gewichtsabhängigen Preises und des Gewichts der mehreren Waren zu ermitteln; und/oder
• wenn ermittelt wird, dass die Warendaten (212) für die Warenart der mehreren Waren einen Stückpreis angeben, den Preis der mehreren Waren unter Verwendung des Stückpreises und einer Warenanzahl der mehreren Waren zu ermitteln.

4. Selbstbedienungsterminal (100) gemäß Anspruch 3,
wobei die ein oder mehreren Prozessoren (110) eingerichtet sind, wenn ermittelt wird, dass zumindest eine Ware der mehreren Waren eine von den anderen Waren der mehreren Waren verschiedene Warenart aufweist, Instruktionen an eine Ausgabevorrichtung bereitzustellen, die einen Benutzer des Selbstbedienungsterminals (100) anweisen, die mehreren Waren zurück auf die Ablagefläche (104) der Waage (102) zu legen und nur Waren gleicher Warenart gleichzeitig von der Ablagefläche (104) der Waage (102) zu entnehmen; und
wobei das Selbstbedienungsterminal (100) optional ferner die Ausgabevorrichtung aufweist.

5. Selbstbedienungsterminal (100) gemäß einem der Ansprüche 1 bis 4,
• wobei die ein oder mehreren Prozessoren (110) eingerichtet sind: wenn diese die ersten Gewichtsdaten von der Waage (102) empfangen, ein erstes Auslösesignal an den mindestens einen Bildgebungssensor (106) bereitzustellen, welches den mindestens einen Bildgebungssensor (106) dazu veranlasst, das mindestens eine erste Bild der Ablagefläche (104) zu erfassen, und wenn diese die zweiten Gewichtsdaten von der Waage (102) empfangen, ein zweites Auslösesignal an den mindestens einen Bildgebungssensor (106) bereitzustellen, welches den mindestens einen Bildgebungssensor (106) dazu veranlasst, das mindestens eine zweite Bild der Ablagefläche (104) zu erfassen; oder
• wobei die Waage (102) eingerichtet ist: wenn diese die ersten Gewichtsdaten erfasst, ein erstes Auslösesignal an den mindestens einen Bildgebungssensor (106) bereitzustellen, welches den mindestens einen Bildgebungssensor (106) dazu veranlasst, das mindestens eine erste Bild der Ablagefläche (104) zu erfassen, und wenn diese die zweiten Gewichtsdaten erfasst, ein zweites Auslösesignal an den mindestens einen Bildgebungssensor (106) bereitzustellen, welches den mindestens einen Bildgebungssensor (106) dazu veranlasst, das mindestens eine zweite Bild der Ablagefläche (104) zu erfassen.

6. Selbstbedienungsterminal (100) gemäß einem der Ansprüche 1 bis 5,
• wobei die Waage (102) eingerichtet ist, jeweilige Gewichtsdaten zu erfassen und an die ein oder mehreren Prozessoren (110) bereitzustellen, sobald eine Änderung des Gesamtgewichts von auf der Ablagefläche (104) angeordneten Waren größer als oder gleich einem vordefinierten Erfass-Schwellenwert ist;
• wobei die Waage (102) eingerichtet ist oder die ein oder mehreren Prozessoren (110) eingerichtet sind, in Reaktion auf das Erfassen jeweiliger Gewichtsdaten ein jeweiliges Auslösesignal an den mindestens einen Bildgebungssensor (106) bereitzustellen, welches den mindestens einen Bildgebungssensor (106) dazu veranlasst, ein den jeweiligen Gewichtsdaten zugehöriges Bild der Ablagefläche (104) zu erfassen; und
• wobei die ein oder mehreren Prozessoren (110) eingerichtet sind, unter Verwendung jeweils erfasster Gewichtsdaten und der jeweils zuvor erfassten Gewichtsdaten zu ermitteln, ob eine oder mehrere Waren von der Ablagefläche (104) entnommen wurden und unter Verwendung der jeweils zugehörigen Bilder zu ermitteln, welche ein oder mehreren Waren jeweils von der Ablagefläche (104) entnommen wurden.

7. Selbstbedienungsterminal (100) gemäß Anspruch 6,
wobei das Selbstbedienungsterminal (100) eingerichtet ist, die jeweils entnommenen ein oder mehreren Waren zu ermitteln bis keine Waren mehr auf der Ablagefläche (104) der Waage (102) verbleiben; und
wobei die ein oder mehreren Prozessoren (110) eingerichtet sind, ausgehend von den aus dem mindestens einen ersten Bild ermittelten Waren für die jeweils entnommenen ein oder mehreren Waren einen jeweiligen Preis der ein oder mehreren Waren gemäß Anspruch 2 oder 3 zu ermitteln und einen Gesamtpreis für die aus dem mindestens einen ersten Bild ermittelten Waren als Summe der ermittelten Preise zu ermitteln.

8. Selbstbedienungsterminal (100) gemäß einem der Ansprüche 1 bis 7, ferner aufweisend:
eine Anzeigevorrichtung, die eingerichtet ist, jede Warenart anzuzeigen, die mindestens eine Ware der aus dem mindestens einen ersten Bild ermittelten Waren aufweist.

9. Selbstbedienungsterminal (100) gemäß Anspruch 8,
wobei die Anzeigevorrichtung eingerichtet ist, für jede Warenart ferner anzuzeigen:
• sofern in Kombination mit Anspruch 2 oder 3, den für die ein oder mehreren Waren ermittelten Preis; und/oder
• eine Anzahl an Waren, die in den aus dem mindestens einen ersten Bild ermittelten Waren die jeweilige Warenart aufweisen; und/oder
• sofern in Kombination mit Anspruch 2 oder 3, den der jeweiligen Warenart zugeordneten Stückpreis oder gewichtsabhängigen Preis; und/oder
• sofern in Kombination mit Anspruch 7, den ermittelten Gesamtpreis.

10. Selbstbedienungsterminal (100), aufweisend:
• eine Waage (102) mit einer Ablagefläche (104), auf der Waren angeordnet werden können, wobei die Waage (102) eingerichtet ist, Gewichtsdaten zu erfassen, welche ein Gesamtgewicht von auf der Ablagefläche (104) angeordneten Waren angeben;
• mindestens einen Bildgebungssensor (106), der eingerichtet ist, Bilder einer Umgebung des Selbstbedienungsterminals (100) über der Ablagefläche (104) der Waage (102) zu erfassen;
• einen oder mehrere Prozessoren (110), die eingerichtet sind:
∘ erste Gewichtsdaten von der Waage (102) zu empfangen, wobei die ersten Gewichtsdaten ein erstes Gesamtgewicht von Waren, die sich auf der Ablagefläche (104) befinden, angeben;
∘ zweite Gewichtsdaten von der Waage (102) zu empfangen, wobei die zweiten Gewichtsdaten ein zweites Gesamtgewicht von Waren, die sich auf der Ablagefläche (104) befinden, angeben;
∘ unter Verwendung der ersten Gewichtsdaten und der zweiten Gewichtsdaten zu ermitteln, ob eine Ware von der Ablagefläche (104) entnommen wurde;
**dadurch gekennzeichnet, dass**,
∘ wenn ermittelt wird, dass eine Ware von der Ablagefläche (104) entnommen wurde, aus mindestens einem Bild des mindestens einen Bildgebungssensors (106) ermittelt wird, ob sich eine Ware und wenn ja welche Ware sich in einer Hand eines Benutzers des Selbstbedienungsterminals (100) befindet; und dass
∘ die Ware, die sich in der Hand des Benutzers des Selbstbedienungsterminals (100) befindet, als die von der Ablagefläche (104) entnommene Ware ermittelt wird.

11. Selbstbedienungsterminal (100) gemäß Anspruch 10, wobei die Waage (102) derart eingerichtet ist, dass ein Einkaufskorb auf der Ablagefläche (104) angeordnet werden kann, in dem sich die auf der Ablagefläche (104) angeordneten Waren befinden können.

12. Selbstbedienungsterminal (100) gemäß Anspruch 10 oder 11,
wobei die ein oder mehreren Prozessoren (110) eingerichtet sind, zu ermitteln, ob Warendaten (212), die für jede Ware jeweils einen gewichtsabhängigen Preis oder einen Stückpreis angeben, für die entnommene Ware einen gewichtsabhängigen Preis oder einen Stückpreis angeben; und wobei die ein oder mehreren Prozessoren (110) optional ferner eingerichtet sind:
• wenn ermittelt wird, dass die Warendaten (212) für die entnommene Ware einen gewichtsabhängigen Preis angeben, eine Differenz zwischen dem ersten Gesamtgewicht und dem zweiten Gesamtgewicht als Gewicht der entnommenen Ware zu ermitteln, und einen Preis der entnommenen Ware unter Verwendung des gewichtsabhängigen Preises und des Gewichts der entnommenen Ware zu ermitteln; und/oder
• wenn ermittelt wird, dass die Warendaten (212) für die entnommene Ware einen Stückpreis angeben, den Stückpreis als Preis der entnommenen Ware zu ermitteln.

13. Selbstbedienungsterminal (100) gemäß Anspruch 12,
wobei die Warendaten (212) ferner für jede Ware, für die ein Stückpreis angegeben ist, ein jeweiliges Sollgewicht einer solchen Ware angeben; und
wobei die ein oder mehreren Prozessoren (110) eingerichtet sind, wenn ermittelt wird, dass die Warendaten (212) für die entnommene Ware einen Stückpreis angeben:
• eine Differenz zwischen dem ersten Gesamtgewicht und dem zweiten Gesamtgewicht als Gewicht der entnommenen Ware zu ermitteln;
• zu ermitteln, ob eine Differenz zwischen dem von den Warendaten (212) angegebenen Sollgewicht und dem aus der Differenz des ersten Gesamtgewichts und des zweiten Gesamtgewichts ermittelten Gewicht kleiner als oder gleich einem vordefinierten Verifizierungs-Schwellenwert ist; und
• wenn ermittelt wird, dass die Differenz kleiner als oder gleich dem vordefinierten Verifizierungs-Schwellenwert ist, die aus dem mindestens einen Bild ermittelte entnommene Ware zu verifizieren und den Stückpreis als Preis der entnommenen Ware zu ermitteln.

14. Selbstbedienungsterminal (100) gemäß einem der Ansprüche 10 bis 13,
wobei der mindestens eine Bildgebungssensor (106) ferner eingerichtet ist, Ablagefläche-Bilder der Ablagefläche (104) der Waage (102) zu erfassen;
wobei die ein oder mehreren Prozessoren (110) eingerichtet sind:
• aus mindestens einem von dem mindestens einen Bildgebungssensor (106) empfangenen und vor dem mindestens einen Bild erfassten ersten Ablagefläche-Bild zu ermitteln, welche ein oder mehreren ersten Waren der sich auf der Ablagefläche (104) befindenden Waren das erste Ablagefläche-Bild zeigt;
• aus mindestens einem von dem mindestens einen Bildgebungssensor (106) empfangenen und nach dem mindestens einen Bild erfassten zweiten Ablagefläche-Bild zu ermitteln, welche ein oder mehreren zweiten Waren das zweite Ablagefläche-Bild zeigt;
• unter Verwendung der ein oder mehreren ersten Waren und der ein oder mehreren zweiten Waren zu ermitteln, welche Ware von der Ablagefläche (104) entnommen wurden; und
• wenn die unter Verwendung der ein oder mehreren ersten Waren und der ein oder mehreren zweiten Waren ermittelte entnommene Ware der aus dem mindestens einen Bild ermittelten entnommenen Ware entspricht, die entnommene Ware zu verifizieren.

15. Selbstbedienungsterminal (100) gemäß einem der Ansprüche 10 bis 14,
wobei das Selbstbedienungsterminal (100) keine Scanner-Einheit aufweist; und/oder
wobei das Selbstbedienungsterminal (100) keine andere Waage aufweist.

## Claims

1. Self-service terminal (100), comprising:
• scales (102) with a set-down surface (104), on which products can be arranged, the scales (102) being configured to capture weight data indicating a total weight of products arranged on the set-down surface (104);
• at least one imaging sensor (106) which is configured to capture images of the set-down surface (104) of the scales (102);
• one or more processors (110) which are configured:
∘ to determine which products are arranged on the set-down surface (104) from at least one first image from the at least one imaging sensor (106);
∘ to receive first weight data from the scales (102), the first weight data indicating a first total weight of the products located on the set-down surface (104);
∘ to receive second weight data from the scales (102), the second weight data indicating a second total weight of products located on the set-down surface (104);
**characterized in that**
∘ the first weight data and the second weight data are used to determine whether one or more products have been removed from the set-down surface (104); and
∘ at least one second image from the at least one imaging sensor (106) is used to determine which one or more products have been removed from the set-down surface (104).

2. Self-service terminal (100) according to Claim 1, wherein, if it is determined from the at least one second image that a product has been removed from the set-down surface (104), the one or more processors (110) are configured to determine whether product data (212), which respectively indicate a weight-dependent price or a unit price for each product, indicate a weight-dependent price or a unit price for the product that has been removed; and
wherein the one or more processors (110) are optionally also configured:
• if it is determined that the product data (212) indicate a weight-dependent price for the product that has been removed, to determine a difference between the first total weight and the second total weight as the weight of the product that has been removed, and to determine a price of the product that has been removed using the weight-dependent price and the weight of the product that has been removed; and/or
• if it is determined that the product data (212) indicate a unit price for the product that has been removed, to determine the unit price as the price of the product that has been removed.

3. Self-service terminal (100) according to Claim 1 or 2,
wherein, if it is determined from the at least one second image that a plurality of products have been removed from the set-down surface (104), the one or more processors (110) are configured to determine whether each product of the plurality of products belongs to the same product type; and, if it is determined that each product of the plurality of products belongs to the same product type, to determine whether the product data (212), which respectively indicate a weight-dependent price or a unit price for each product type, indicate a weight-dependent price or a unit price for the product type of the plurality of products; and
wherein the one or more processors (110) are optionally also configured:
• if it is determined that the product data (212) indicate a weight-dependent price for the product type of the plurality of products, to determine a difference between the first total weight and the second total weight as the weight of the plurality of products, and to determine a price of the plurality of products using the weight-dependent price and the weight of the plurality of products; and/or
• if it is determined that the product data (212) for the product type of the plurality of products indicate a unit price, to determine the price of the plurality of products using the unit price and a number of products of the plurality of products.

4. Self-service terminal (100) according to Claim 3,
wherein, if it is determined that at least one product of the plurality of products has a product type different from the other products of the plurality of products, the one or more processors (110) are configured to provide instructions to an output device which instruct a user of the self-service terminal (100) to place the plurality of products back onto the set-down surface (104) of the scales (102) and to remove only products of the same product type from the set-down surface (104) of the scales (102) at the same time; and
wherein the self-service terminal (100) optionally further comprises the output device.

5. Self-service terminal (100) according to one of Claims 1 to 4,
• wherein the one or more processors (110) are configured: when they receive the first weight data from the scales (102), to provide the at least one imaging sensor (106) with a first trigger signal which causes the at least one imaging sensor (106) to capture the at least one first image of the set-down surface (104), and, when they receive the second weight data from the scales (102), to provide the at least one imaging sensor (106) with a second trigger signal which causes the at least one imaging sensor (106) to capture the at least one second image of the set-down surface (104); or
• wherein the scales (102) are configured: when they capture the first weight data, to provide the at least one imaging sensor (106) with a first trigger signal which causes the at least one imaging sensor (106) to capture the at least one first image of the set-down surface (104), and, when they capture the second weight data, to provide the at least one imaging sensor (106) with a second trigger signal which causes the at least one imaging sensor (106) to capture the at least one second image of the set-down surface (104).

6. Self-service terminal (100) according to one of Claims 1 to 5,
• wherein the scales (102) are configured to capture respective weight data and to provide said data to the one or more processors (110) as soon as a change in the total weight of products arranged on the set-down surface (104) is greater than or equal to a predefined capture threshold value;
• wherein the scales (102) are configured or the one or more processors (110) are configured, in response to the capture of respective weight data, to provide the at least one imaging sensor (106) with a respective trigger signal which causes the at least one imaging sensor (106) to capture an image of the set-down surface (104) associated with the respective weight data; and
• wherein the one or more processors (110) are configured to use respectively captured weight data and the respectively previously captured weight data to determine whether one or more products have been removed from the set-down surface (104) and to use the respectively associated images to determine which one or more products have been removed from the set-down surface (104) in each case.

7. Self-service terminal (100) according to Claim 6,
wherein the self-service terminal (100) is configured to determine the one or more products that have been removed in each case until no more products remain on the set-down surface (104) of the scales (102); and
wherein the one or more processors (110) are configured, on the basis of the products determined from the at least one first image, to determine, for the one or more products that have been removed in each case, a respective price of the one or more products according to Claim 2 or 3 and to determine a total price for the products determined from the at least one first image as the sum of the determined prices.

8. Self-service terminal (100) according to one of Claims 1 to 7, further comprising:
a display device configured to display each product type comprising at least one product of the products determined from the at least one first image.

9. Self-service terminal (100) according to Claim 8,
wherein the display device is configured to further display for each product type:
• if in combination with Claim 2 or 3, the price determined for the one or more products; and/or
• a number of products having the respective product type in the products determined from the at least one first image; and/or
• if in combination with Claim 2 or 3, the unit price or weight-dependent price assigned to the respective product type; and/or
• if in combination with Claim 7, the total price determined.

10. Self-service terminal (100), comprising:
• scales (102) with a set-down surface (104), on which products can be arranged, the scales (102) being configured to capture weight data indicating a total weight of products arranged on the set-down surface (104);
• at least one imaging sensor (106) which is configured to capture images of an environment of the self-service terminal (100) above the set-down surface (104) of the scales (102);
• one or more processors (110) which are configured:
∘ to receive first weight data from the scales (102), the first weight data indicating a first total weight of products located on the set-down surface (104);
∘ to receive second weight data from the scales (102), the second weight data indicating a second total weight of products located on the set-down surface (104);
∘ to use the first weight data and the second weight data to determine whether a product has been removed from the set-down surface (104); **characterized in that**
∘ if it is determined that a product has been removed from the set-down surface (104), to use at least one image from the at least one imaging sensor (106) to determine whether a product and, if so, which product is in a hand of a user of the self-service terminal (100); and
∘ to identify the product in the hand of the user of the self-service terminal (100) as the product that has been removed from the set-down surface (104).

11. Self-service terminal (100) according to Claim 10, wherein the scales (102) are configured such that a shopping basket can be arranged on the set-down surface (104), in which the products arranged on the set-down surface (104) can be located.

12. Self-service terminal (100) according to Claim 10 or 11,
wherein the one or more processors (110) are configured to determine whether product data (212), which respectively indicate a weight-dependent price or a unit price for each product, indicate a weight-dependent price or a unit price for the product that has been removed;
and wherein the one or more processors (110) are optionally further configured:
• if it is determined that the product data (212) indicate a weight-dependent price for the product that has been removed, to determine a difference between the first total weight and the second total weight as the weight of the product that has been removed, and to determine a price of the product that has been removed using the weight-dependent price and the weight of the product that has been removed; and/or
• if it is determined that the product data (212) indicate a unit price for the product that has been removed, to determine the unit price as the price of the product that has been removed.

13. Self-service terminal (100) according to Claim 12, wherein the product data (212) also indicate, for each product for which a unit price is indicated, a respective target weight of such a product; and
wherein, if it is determined that the product data (212) indicate a unit price for the product that has been removed, the one or more processors (110) are configured:
• to determine a difference between the first total weight and the second total weight as the weight of the product that has been removed;
• to determine whether a difference between the target weight indicated by the product data (212) and the weight determined from the difference between the first total weight and the second total weight is less than or equal to a predefined verification threshold value; and
• if it is determined that the difference is less than or equal to the predefined verification threshold value, to verify the removed product determined from the at least one image and to determine the unit price as the price of the product that has been removed.

14. Self-service terminal (100) according to one of Claims 10 to 13,
wherein the at least one imaging sensor (106) is further configured to capture set-down surface images of the set-down surface (104) of the scales (102);
wherein the one or more processors (110) are configured:
• to determine, from at least one first set-down surface image received from the at least one imaging sensor (106) and captured before the at least one image, which one or more first products of the products located on the set-down surface (104) are shown by the first set-down surface image;
• to determine, from at least one second set-down surface image received from the at least one imaging sensor (106) and captured after the at least one image, which one or more second products are shown by the second set-down surface image;
• to use the one or more first products and the one or more second products to determine which product has been removed from the set-down surface (104); and
• if the removed product determined using the one or more first products and the one or more second products corresponds to the removed product determined from the at least one image, to verify the product that has been removed.

15. Self-service terminal (100) according to one of Claims 10 to 14,
wherein the self-service terminal (100) does not have a scanner unit; and/or
wherein the self-service terminal (100) has no other scales.

## Revendications

1. Borne en libre-service (100), comprenant :
• une balance (102) avec une surface de dépôt (104) sur laquelle peuvent être placés des articles, la balance (102) étant conçue pour capturer des données de poids qui indiquent un poids total des articles placés sur la surface de dépôt (104) ;
• au moins un capteur d'imagerie (106) conçu pour capturer des images de la surface de dépôt (104) de la balance (102) ;
• un ou plusieurs processeurs (110), qui sont conçus pour :
∘ déterminer, à partir d'au moins une première image de l'au moins un capteur d'imagerie (106), quels articles sont placés sur la surface de dépôt (104) ;
∘ recevoir des premières données de poids provenant de la balance (102), les premières données de poids indiquant un premier poids total des articles se trouvant sur la surface de dépôt (104) ;
∘ recevoir des deuxièmes données de poids provenant de la balance (102), les deuxièmes données de poids indiquant un deuxième poids total des articles se trouvant sur la surface de dépôt (104) ; **caractérisée en ce que**
∘ déterminer, à l'aide des premières données de poids et des deuxièmes données de poids, si un ou plusieurs articles ont été retirés de la surface de dépôt (104) ; et
∘ déterminer, à partir d'au moins une deuxième image provenant de l'au moins un capteur d'imagerie (106), quel ou quels articles ont été retirés de la surface de dépôt (104).

2. Borne en libre-service (100) selon la revendication 1,
dans laquelle le ou les processeurs (110) sont conçus pour déterminer, lorsqu'il est déterminé à partir de l'au moins une deuxième image qu'un article a été retiré de la surface de dépôt (104), si les données d'articles (212), qui indiquent pour chaque article un prix en fonction du poids ou un prix unitaire, indiquent un prix en fonction du poids ou un prix unitaire pour l'article retiré ; et
dans laquelle le ou les processeurs (110) sont en outre conçus, de manière facultative, pour :
• déterminer, lorsqu'il est déterminé que les données d'articles (212) indiquent un prix en fonction du poids pour l'article retiré, une différence entre le premier poids total et le deuxième poids total comme étant le poids de l'article retiré, et pour déterminer un prix de l'article retiré en utilisant le prix en fonction du poids et le poids de l'article retiré ; et/ou
• déterminer, lorsqu'il est déterminé que les données d'articles (212) pour l'article retiré indiquent un prix unitaire, le prix unitaire comme prix de l'article retiré.

3. Borne en libre-service (100) selon la revendication 1 ou 2,
dans laquelle le ou les processeurs (110) sont conçus pour déterminer, lorsqu'il est déterminé à partir de l'au moins deuxième image que plusieurs articles ont été retirés de la surface de dépôt (104), si chaque article parmi les plusieurs articles appartient à un même type d'article ; et s'il est déterminé que chaque article parmi les plusieurs articles appartient au même type d'article, déterminer si les données d'articles (212), qui indiquent respectivement un prix en fonction du poids ou un prix unitaire pour chaque type d'article, indiquent un prix en fonction du poids ou un prix unitaire pour le type d'article parmi les plusieurs articles ; et
dans laquelle le ou les processeurs (110) sont en outre conçus, de manière facultative, pour :
• déterminer, lorsqu'il est déterminé que les données d'articles (212) pour le type d'article des plusieurs articles indiquent un prix en fonction du poids, une différence entre le premier poids total et le deuxième poids total comme étant le poids des plusieurs articles, et pour déterminer un prix des plusieurs articles en utilisant le prix en fonction du poids et le poids des plusieurs articles ; et/ou
• déterminer, lorsqu'il est déterminé que les données d'articles (212) pour le type d'article des plusieurs articles indiquent un prix unitaire, le prix des plusieurs articles en utilisant le prix unitaire et un nombre d'articles des plusieurs articles.

4. Borne en libre-service (100) selon la revendication 3,
dans laquelle le ou les processeurs (110) sont conçus pour, lorsqu'il est déterminé qu'au moins un article parmi les plusieurs articles présente un type d'article différent des autres articles parmi les plusieurs articles, fournir des instructions à un dispositif de sortie qui ordonne à un utilisateur de la borne en libre-service (100) de replacer les plusieurs articles sur la surface de dépôt (104) de la balance (102) et de ne retirer de la surface de dépôt (104) de la balance (102) que des articles du même type d'article à la fois ; et
la borne en libre-service (100) comprenant en outre, de manière facultative, le dispositif de sortie.

5. Borne en libre-service (100) selon l'une des revendications 1 à 4,
• dans laquelle le ou les processeurs (110) sont conçus pour : lorsqu'ils reçoivent les premières données de poids provenant de la balance (102), fournir un premier signal de déclenchement à l'au moins un capteur d'imagerie (106), qui amène l'au moins un capteur d'imagerie (106) à capturer l'au moins une première image de la surface de dépôt (104) et, lorsqu'ils reçoivent les deuxièmes données de poids provenant de la balance (102), fournir un deuxième signal de déclenchement à l'au moins un capteur d'imagerie (106), qui amène l'au moins un capteur d'imagerie (106) à capturer l'au moins une deuxième image de la surface de dépôt (104) ; ou
• dans laquelle la balance (102) est conçue pour : lorsqu'elle capture les premières données de poids, fournir un premier signal de déclenchement à l'au moins un capteur d'imagerie (106), qui amène l'au moins un capteur d'imagerie (106) à capturer l'au moins une première image de la surface de dépôt (104), et lorsqu'elle capture les deuxièmes données de poids, fournir un deuxième signal de déclenchement à l'au moins un capteur d'imagerie (106), qui amène l'au moins un capteur d'imagerie (106) à capturer l'au moins une deuxième image de la surface de dépôt (104).

6. Borne en libre-service (100) selon l'une des revendications 1 à 5,
• dans laquelle la balance (102) est conçue pour capturer des données de poids respectives et les fournir au ou aux processeurs (110) dès qu'une variation du poids total des articles placés sur la surface de dépôt (104) est supérieure ou égale à un seuil de détection prédéfini ;
• dans laquelle la balance (102) est conçue ou le ou les processeurs (110) sont conçus pour fournir, en réponse à la détection des données de poids respectives, un signal de déclenchement respectif à l'au moins un capteur d'imagerie (106), qui amène l'au moins un capteur d'imagerie (106) à capturer une image de la surface de dépôt (104) associée aux données de poids respectives ; et
• dans laquelle le ou les processeurs (110) sont conçus pour déterminer, à l'aide des données de poids respectivement détectées et des données de poids respectivement détectées précédemment, si un ou plusieurs articles ont été retirés de la surface de dépôt (104) et pour déterminer, à l'aide des images respectivement associées, quel ou quels articles ont été retirés de la surface de dépôt (104).

7. Borne en libre-service (100) selon la revendication 6,
dans laquelle la borne en libre-service (100) est conçue pour déterminer le ou les articles retirés jusqu'à ce qu'il ne reste plus aucun article sur la surface de dépôt (104) de la balance (102) ; et
dans laquelle le ou les processeurs (110) sont conçus pour déterminer, à partir des articles déterminés à partir de l'au moins une première image, un prix respectif pour le ou les articles retirés selon la revendication 2 ou 3 et pour déterminer un prix total pour les articles déterminés à partir de l'au moins une première image comme somme des prix déterminés.

8. Borne en libre-service (100) selon l'une des revendications 1 à 7, comprenant en outre :
un dispositif d'affichage qui est conçu pour afficher chaque type d'article comprenant au moins un article parmi les articles déterminés à partir de l'au moins une première image.

9. Borne en libre-service (100) selon la revendication 8,
dans laquelle le dispositif d'affichage est conçu pour afficher en outre, pour chaque type d'article :
• en combinaison avec la revendication 2 ou 3, le prix déterminé pour le ou les articles ; et/ou
• un nombre d'articles qui présentent le type d'article respectif parmi les articles déterminés à partir de l'au moins une première image ; et/ou
• en combinaison avec la revendication 2 ou 3, le prix unitaire ou le prix en fonction du poids associé au type d'article respectif ; et/ou
• en combinaison avec la revendication 7, le prix total déterminé.

10. Borne en libre-service (100), comprenant :
• une balance (102) avec une surface de dépôt (104) sur laquelle peuvent être placés des articles, la balance (102) étant conçue pour capturer des données de poids qui indiquent un poids total des articles placés sur la surface de dépôt (104) ;
• au moins un capteur d'imagerie (106) conçu pour capturer des images d'un environnement de la borne en libre-service (100) au-dessus de la surface de dépôt (104) de la balance (102) ;
• un ou plusieurs processeurs (110), qui sont conçus pour :
∘ recevoir des premières données de poids provenant de la balance (102), les premières données de poids indiquant un premier poids total d'articles se trouvant sur la surface de dépôt (104) ;
∘ recevoir des deuxièmes données de poids provenant de la balance (102), les deuxièmes données de poids indiquant un deuxième poids total des articles se trouvant sur la surface de dépôt (104) ;
∘ déterminer, à l'aide des premières données de poids et des deuxièmes données de poids, si un article a été retiré de la surface de dépôt (104) ; **caractérisée en ce que**
∘ déterminer, lorsqu'il est déterminé qu'un article a été retiré de la surface de dépôt (104), à partir d'au moins une image provenant de l'au moins un capteur d'imagerie (106), si un article se trouve dans la main d'un utilisateur de la borne en libre-service (100) et, si oui, de quel article il s'agit ; et
∘ déterminer l'article qui se trouve dans la main de l'utilisateur de la borne en libre-service (100) comme étant l'article retiré de la surface de dépôt(104).

11. Borne en libre-service (100) selon la revendication 10,
dans laquelle la balance (102) est conçue de telle sorte qu'un panier d'achat peut être placé sur la surface de dépôt (104), dans lequel les articles placés sur la surface de dépôt (104) peuvent se trouver.

12. Borne en libre-service (100) selon la revendication 10 ou 11,
dans laquelle le ou les processeurs (110) sont conçus pour déterminer si les données d'articles (212), qui indiquent pour chaque article un prix en fonction du poids ou un prix unitaire, indiquent un prix en fonction du poids ou un prix unitaire pour l'article retiré ; et
dans laquelle le ou les processeurs (110) sont en outre conçus, de manière facultative, pour :
• déterminer, lorsqu'il est déterminé que les données d'articles (212) indiquent un prix en fonction du poids pour l'article retiré, une différence entre le premier poids total et le deuxième poids total comme étant le poids de l'article retiré, et pour déterminer un prix de l'article retiré en utilisant le prix en fonction du poids et le poids de l'article retiré ; et/ou
• déterminer, lorsqu'il est déterminé que les données d'articles (212) pour l'article retiré indiquent un prix unitaire, le prix unitaire comme prix de l'article retiré.

13. Borne en libre-service (100) selon la revendication 12,
dans laquelle les données d'articles (212) indiquent en outre, pour chaque article pour lequel un prix unitaire est indiqué, un poids de consigne respectif d'un tel article ; et
dans laquelle le ou les processeurs (110) sont conçus, lorsqu'il est déterminé que les données d'articles (212) indiquent un prix unitaire pour l'article retiré, pour :
• déterminer une différence entre le premier poids total et le deuxième poids total comme étant le poids de l'article retiré ;
• déterminer si une différence entre le poids théorique indiqué par les données d'articles (212) et le poids déterminé à partir de la différence entre le premier poids total et le deuxième poids total est inférieure ou égale à une valeur seuil de vérification prédéfinie ; et
• lorsqu'il est déterminé que la différence est inférieure ou égale à la valeur seuil de vérification prédéfinie, vérifier l'article retiré déterminé à partir de l'au moins une image et déterminer le prix unitaire comme étant le prix de l'article retiré.

14. Borne en libre-service (100) selon l'une des revendications 10 à 13,
dans laquelle l'au moins un capteur d'imagerie (106) est en outre conçu pour capturer des images de la surface de dépôt (104) de la balance (102) ;
dans laquelle le ou les processeurs (110) sont conçus pour :
• déterminer, à partir d'au moins une première image de la surface de dépôt reçue par l'au moins un capteur d'imagerie (106) et capturée avant l'au moins une image, quel(s) premier(s) article(s) parmi les articles se trouvant sur la surface de dépôt (104) est (sont) représenté(s) sur la première image de la surface de dépôt ;
• déterminer, à partir d'au moins une deuxième image de la surface de dépôt reçue par l'au moins un capteur d'imagerie (106) et capturée après l'au moins une image, quel(s) deuxième(s) article(s) est (sont) représenté(s) sur la deuxième image de la surface de dépôt ;
• déterminer, à l'aide du ou des premiers articles et du ou des deuxièmes articles, quels articles ont été retirés de la surface de dépôt (104) ; et
• si l'article retiré déterminé à l'aide du ou des premiers articles et du ou des deuxièmes articles correspond à l'article retiré déterminé à partir de l'au moins une image, vérifier l'article retiré.

15. Borne en libre-service (100) selon l'une des revendications 10 à 14,
dans laquelle la borne en libre-service (100) ne comporte pas d'unité de scanner ; et/ou
dans laquelle la borne en libre-service (100) ne comporte pas d'autre balance.
